(19) Europäisches Patentamt
European Patent Office
Office européen des brevets

(11) **EP 3 340 343 B1**

(12) **EUROPEAN PATENT SPECIFICATION**

(45) Date of publication and mention
of the grant of the patent:
**23.11.2022 Bulletin 2022/47**

(21) Application number: **17208393.3**

(22) Date of filing: **19.12.2017**

(51) International Patent Classification (IPC):
*H01M 50/446* (2021.01)    *H01M 10/052* (2010.01)
*H01M 10/0587* (2010.01)   *H01M 50/449* (2021.01)
*H01M 50/491* (2021.01)    *H01M 50/489* (2021.01)

(52) Cooperative Patent Classification (CPC):
**H01M 10/052; H01M 10/0587; H01M 50/446;
H01M 50/449; H01M 50/491;** H01M 50/489;
Y02E 60/10; Y02P 70/50

(54) **SEPARATOR FOR POWER STORAGE DEVICE, AND LAMINATED BODY, ROLL AND SECONDARY BATTERY USING IT**

SEPARATOR FÜR ENERGIESPEICHERVORRICHTUNG UND LAMINIERTER KÖRPER, ROLLE UND SEKUNDÄRBATTERIE DAMIT

SÉPARATEUR DE DISPOSITIF DE STOCKAGE D'ÉNERGIE ET CORPS STRATIFIÉ, ROULEAU ET BATTERIE SECONDAIRE L'UTILISANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2016 JP 2016246831
17.11.2017 JP 2017222082**

(43) Date of publication of application:
**27.06.2018 Bulletin 2018/26**

(73) Proprietor: **Asahi Kasei Kabushiki Kaisha
Tokyo 100-0006 (JP)**

(72) Inventor: **Okuda, Toshiaki
Tokyo, 101-8101 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 3 141 385       JP-A- 2011 154 936
JP-A- 2011 192 543     JP-A- 2012 049 052
US-A1- 2009 246 613   US-A1- 2015 111 086
US-A1- 2015 140 403**

**Description**

BACKGROUND OF THE INVENTION

Field of the Invention

The present invention relates to a separator for a power storage device, and to a laminated body, a roll and a power storage device comprising said laminated body or roll.

Related Background Art

Microporous films composed mainly of polyolefin resins exhibit excellent electrical insulating properties and ion permeability, and are therefore widely utilized as separators in batteries and condensers. With the increasing multifunctionality and reduced weights of electronic devices in recent years, there has been rising demand for secondary batteries having high power density and high-capacity density, for use as power sources. Microporous films composed mainly of polyolefin resins are widely used as the separators for such secondary batteries.

PTL 1, for example, describes a polyolefin multilayer microporous film comprising a first microporous layer made of a specific first polyolefin resin and a second microporous layer made of a second polyolefin resin, with ranges specified for the (I) porosity (%)/film thickness ($\mu$m) and (II) gas permeability in terms of a film thickness of 16 $\mu$m.

PTL 2 describes a polyolefin multilayer microporous film comprising at least a pair of first micropore layers forming both surface layers and at least one second micropore layer provided between both of the surface layers, wherein the static friction coefficient of one arbitrary side of the surface layer of the polyolefin multilayer microporous film is no greater than 1.1 with respect to the other side in the machine direction (MD), and the pore density, as calculated from the mean pore size and porosity measured by mercury porosimetry, is 4 or greater.

PTL 3 describes a battery separator comprising a laminated polyethylene microporous film and a modified porous layer on at least one side thereof, the laminated polyethylene microporous film having a specified shutdown temperature and air permeability resistance increase rate, having projections consisting of polyethylene with specific shapes on the surface, and having a specified tensile strength.

PTL 4 describes a battery separator comprising a laminated polyethylene microporous film and a modified porous layer on at least one side thereof, the laminated polyethylene microporous film having a specified meltdown temperature and air permeability resistance, having projections consisting of polyethylene with specific shapes on the surface, and having a specified tensile strength.

PTL 5 describes a battery separator having a modified porous layer comprising a water-soluble resin or water-dispersible resin and microparticles laminated on at least one side of a polyolefin microporous film substrate, the polyolefin microporous film substrate being one with a three-layer structure formed by laminating surface micropore layers each composed of a resin composition A, and an intermediate micropore layer composed of a resin composition B having a lower melting point than resin composition A.

US 2015/111086 discloses PP/PE/PP separators for lithium batteries with a coating comprising an acrylic resin and alumina particles. Additionally, polyethylene glycol diacrylate may be included.

US2015/140403 discloses separators for lithium batteries comprising a three-layered porous base PP-PE-PP with a coating layer of inorganic particles and acrylic acid ester particles. Polyethylene glycol mono methacrylic acid ester may be included.

From US 2009/246613 low density PE is known for polyolefin separators with an inorganic coating.

EP 3340343 discloses a multi-layer polyolefin porous membrane suitable for laminating a modified porous layer and a battery separator and, more particularly, a separator for a power storage device.

For the polyolefin resin that constitutes the multi-layer polyolefin porous membrane, polyethylene and polypropylene are used.

More particularly, a polyolefin microporous membrane which constitutes a first layer A is made of a polyolefin resin comprising polyethylene as a major ingredient, the content of polyethylene being preferably not less than 80 mass%, and even more preferably of 100 mass%, based on 100 mass% of total amount of polyolefin resin. A polyolefin microporous membrane which constitutes a second layer B is made of a polyolefin resin comprising polyethylene as a main ingredient. In addition, layer B contains polypropylene.

It is also disclosed that the modified porous layer is coated by a resin solution on the side of the multi-layer polyolefin porous membrane. Said varnish includes inorganic particles which can be cross-linked acrylate-based resin particles.

[Citation List]

[Patent Literature]

[PTL 1] International Patent Publication No. WO2015/194667
[PTL 2] International Patent Publication No. WO2013/146403
[PTL 3] International Patent Publication No. WO2015/190264
[PTL 4] International Patent Publication No. WO2015/190265
[PTL 5] Japanese Unexamined Patent Publication No. 2015-50121

SUMMARY OF THE INVENTION

With the separators for power storage devices described in PTLs 1 to 5, however, it has been difficult to achieve a satisfactory balance between the peel strength between the substrate and active layer, the handling properties, the thermal shock properties and the low-temperature cycle characteristic.

One of the problems to be solved by the present invention is to provide a separator for a power storage device having an excellent balance among the properties of peel strength between the substrate and active layer, handling properties, thermal shock properties and the low-temperature cycle characteristic.

As a result of much diligent research directed toward solving the problems mentioned above, the present inventors have completed this invention upon finding that the aforementioned problems can be solved by providing an active layer containing an acrylic resin and if necessary inorganic particles, in a polyolefin multilayer microporous film comprising specific polyolefin resins. The present invention is directed to the separator for a power storage device, a laminated body having said separator, a roll and a power storage device comprising said laminated body as set forth in the appendant claims.

According to the invention it is possible to provide a separator for a power storage device having an excellent balance among the properties of peel strength between the substrate and active layer, handling properties, thermal shock properties and the low-temperature cycle characteristic. According to one embodiment of the invention, the separator for a power storage device has low variation in peel strength between the substrate and the active layer, and excellent impact resistance.

BRIEF DESCRIPTION OF THE DRAWINGS

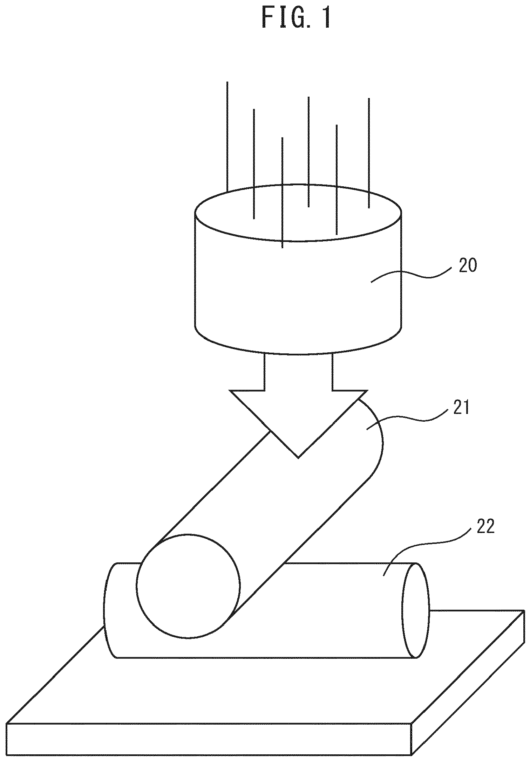

Fig. 1 is a schematic diagram illustrating an impact test according to UL Standard 1642 and/or 2054.

DETAILED DESCRIPTION OF THE INVENTION

An embodiment of the invention (hereunder referred to as "the present embodiment") will now be explained in detail as an example

<Separator for a power storage device>

The separator for a power storage device of the present embodiment comprises a polyolefin multilayer microporous film and an active layer disposed on at least one side thereof.

<Polyolefin multilayer microporous film>

According to the present embodiment, the polyolefin multilayer microporous film comprises polyethylene and polypropylene, the polypropylene concentration at the outermost sections being higher than the polypropylene concentration at the innermost section, and the polyethylene concentration at the outermost sections being lower than the polyethylene concentration at the innermost section. The term "outermost sections" of the polyolefin multilayer microporous film refers to the portions of the two layers on the outside when the polyolefin multilayer microporous film is divided into 3 portions with the same thickness in the thickness direction, and the term "innermost section" refers to the portion of the layer on the inside.

(Outermost sections)

According to the present embodiment, the outermost sections each comprise a first polyolefin resin containing polyethylene and polypropylene. The first polyolefin resin is preferably composed of polyethylene and polypropylene.

If the outermost sections of the polyolefin multilayer microporous film comprise a first polyolefin resin containing polyethylene and polypropylene, the peel strength with respect to the active layer laminated on the outermost sections will be increased. While it is not our intention to be limited to any particular theory, it is believed that, compared to when polyethylene is used alone, including both polypropylene and polyethylene increases the surface free energy on the layer surfaces due to the polar effect of polypropylene, and thus increases the adhesive force with the active layer.

If the outermost sections each comprise a first polyolefin resin containing polyethylene and polypropylene, the low-temperature characteristic and especially the low-temperature cycle property of the separator will be satisfactory. While it is not our intention to be limited to any particular theory, it is believed that, compared to using only polypropylene, which has a glass transition temperature of near 0°C, using a blend with polyethylene lowers the transition temperature and thus renders the material less susceptible to brittle fracture.

The polyethylene and polypropylene for the first polyolefin resin are not particularly restricted, and examples include low-density polyethylene, linear low-density polyethylene (L-LDPE), medium-density polyethylene, high-density polyethylene (HDPE), ultrahigh molecular weight polyethylene (UHMwPE), isotactic polypropylene, atactic polypropylene, ethylene-propylene random copolymer and ethylene-propylene rubber. The polymerization catalyst used for production of the polyethylene or polypropylene is not particularly restricted, and examples include Ziegler-Natta catalysts, Phillips catalysts and metallocene-based catalysts.

The polyethylene in the first polyolefin resin is preferably high-density polyethylene (HDPE) from the viewpoint of obtaining a satisfactory melt extrusion property and uniform stretch working properties. A single type of polyethylene may be used alone, or two or more may be used in combination to impart softness.

From the viewpoint of heat resistance and peel strength between the active layer and substrate, the polyethylene content of the first polyolefin resin is 50 weight% to 99 weight%, preferably 60 weight% to 95 weight% and more preferably 65 weight% to 85 weight%, with 100 weight% as the total weight of the first polyolefin resin.

From the viewpoint of heat resistance of the separator, the polypropylene in the first polyolefin resin is preferably one that has a spatial structure and can improve the heat resistance of the separator, preferred examples being one or more selected from the group consisting of isotactic polypropylene, syndiotactic polypropylene and atactic polypropylene. A single type of polypropylene may be used alone, or two or more may be used in combination.

From the viewpoint of the impact resistance of the power storage device, the first polyolefin resin preferably further comprises linear low-density polyethylene in addition to the polyethylene mentioned above. The first polyolefin resin more preferably further comprises linear low-density polyethylene in addition to high-density polyethylene (HDPE). The linear low-density polyethylene is more preferably ethylene-1-hexene copolymer, for example.

The first polyolefin resin preferably further comprises polypropylene with a heat of fusion of no greater than 150 J/g, in addition to the polypropylene mentioned above. Polypropylene with a heat of fusion of no greater than 150 J/g includes abundant amorphous portions, which improve the impact resistance of the power storage device.

From the viewpoint of the peel strength between the active layer and the substrate, the thermal shock properties and the low-temperature cycle characteristic, the polypropylene content of the first polyolefin resin is 1 weight% to 50 weight%, preferably 5 weight% to 40 weight% and more preferably 15 weight% to 35 weight%, with 100 weight% as the total weight of the first polyolefin resin. A particularly preferred range is from 15 to less than 30 weight%.

From the viewpoint of affinity with the non-aqueous electrolyte solution of the separator, and as well as the output retentivity and the low-temperature cycle characteristic, the outermost sections preferably comprise at least one element selected from the group consisting of silica, alumina and titania, in addition to the first polyolefin resin. The proportion of silica, alumina and titania in the outermost sections is preferably 5 parts by weight or greater, more preferably 10 parts by weight or greater and even more preferably 20 parts by weight or greater, and preferably 90 parts by weight or lower, more preferably 80 parts by weight or lower and even more preferably 70 parts by weight or lower, with respect to 100 parts by weight of the first polyolefin resin in the outermost section. Such proportions are preferred from the viewpoint of obtaining satisfactory heat resistance, and from the viewpoint of improving the stretchability to obtain a porous film with high puncture strength.

(Innermost section)

According to the present embodiment, the innermost section comprises a second polyolefin resin containing polyethylene. The second polyolefin resin is preferably composed of polyethylene.

The polyethylene for the second polyolefin resin is not particularly restricted, and examples include low-density polyethylene, linear low-density polyethylene (L-LDPE), medium-density polyethylene, high-density polyethylene (HDPE) and ultrahigh molecular weight polyethylene (UHMwPE).

From the viewpoint of strength and heat resistance, the polyethylene in the second polyolefin resin is preferably high-density polyethylene (HDPE) or ultrahigh molecular weight polyethylene (UHMwPE). A single type of polyethylene may be used alone, or two or more may be used in combination to impart softness.

From the viewpoint of mold working stability, mechanical strength for thin-films and gas permeability, the polyethylene content of the second polyolefin resin is 50 weight% to 100 weight%, preferably 60 weight% to 100 weight% and more preferably 70 weight% to 95 weight%, with 100 weight% as the total weight of the second polyolefin resin.

From the viewpoint of the impact resistance of the power storage device, the second polyolefin resin preferably further comprises linear low-density polyethylene in addition to the polyethylene mentioned above. The second polyolefin resin more preferably further comprises linear low-density polyethylene (L-LDPE) in addition to the high-density polyethylene (HDPE) and/or ultrahigh molecular weight polyethylene (UHMwPE), from the viewpoint of impact resistance of the power storage device. The linear low-density polyethylene is more preferably ethylene-1-hexene copolymer, for example.

The second polyolefin resin may further include polypropylene. The polypropylene that may be further included in the second polyolefin resin is preferably polypropylene having a heat of fusion of no greater than 150 J/g. Polypropylene having a heat of fusion of no greater than 150 J/g is preferred because it includes abundant amorphous portions, which improve the impact resistance of the power storage device.

When the second polyolefin resin comprises polypropylene, the content is 0 weight% to 25 weight% and preferably 0 weight% to 20 weight% with 100 weight% as the total weight of the second polyolefin resin, from the viewpoint of the heat resistance and impact resistance of the power storage device.

Of the first and second polyolefin resins, the second polyolefin resin preferably comprises linear low-density polyethylene or polypropylene with a heat of fusion of no greater than 150 J/g, from the viewpoint of the impact resistance of the power storage device. While the mechanism is not understood in complete detail, it is conjectured that the impact resistance of the power storage device is satisfactory when the layer comprising linear low-density polyethylene or polypropylene with a heat of fusion of no greater than 150 J/g is thicker than the other layers, or when the layer comprising linear low-density polyethylene or polypropylene with a heat of fusion of no greater than 150 J/g is further separated away from the electrodes (other layers are present between them).

(Other polyolefin resins)

The first and second polyolefin resins may also include polyolefin resins other than polyethylene and polypropylene, in order to achieve a satisfactory balance between the peel strength between the substrate and active layer, the handling properties, the thermal shock properties and the low-temperature cycle characteristic. Other olefin resins to be included in the first and second polyolefin resins are not particularly restricted, and may be polyolefin resins used in common extrusion, ejection, inflation and blow molding procedures, including homopolymers and copolymers such as 1-butene, 4-methyl-1-pentene, 1-hexene and 1-octene, or multistage polymers. Other polyolefins may be used alone, or used in combinations.

(Weight-average molecular weight)

The weight-average molecular weights of the polyethylene and polypropylene in the first and second polyolefin resins are not particularly restricted, and independently, they are preferably from 30,000 to 12,000,000, more preferably at least 50,000 and less than 2,000,000, and even more preferably at least 100,000 and less than 1,000,000. The weight-average molecular weight is preferably 30,000 or greater because the melt tension during melt molding will be high and the moldability will be satisfactory, and the strength of the obtained polyolefin multilayer microporous film will tend to be increased due to tangling between the polymers. The weight-average molecular weight is preferably no greater than 12,000,000 because it will be easier to accomplish uniform melt kneading, and the sheet moldability, and especially its thickness stability, will tend to be superior. The weight-average molecular weight is also preferably lower than 1,000,000 because the pores will be easily occluded during temperature increase, and a satisfactory shutdown property will tend to be obtained.

The ratio between the weight-average molecular weight of polyethylene (MwE) and the weight-average molecular weight of polypropylene (MwP) (MwE/MwP) in the outermost sections in contact with the active layer is preferably 0.6 to 1.5. The MwE/MwP ratio is preferably 0.6 to 1.5 because this will allow variation in the peel strength between the outermost sections and the active layer to be lowered. The reason for this is conjectured to be as follows, although it is not our intention to be limited to any particular theory. When MwE/MwP is 0.6 to 1.5 (nearly 1), the difference in molecular weight between polyethylene and polypropylene is small and the compatibility is more satisfactory. This tends to prevent polyethylene-rich portions and polypropylene-rich portions from being formed in the outermost sections. Since polypropylene has more excellent adhesion with modified layers than polyethylene, it is presumed that reducing maldistribution of polypropylene and polyethylene lowers variation in the peel strength of the active layer and substrate.

According to the present embodiment, the polyolefin multilayer microporous film comprises a first microporous layer and a second microporous layer. From the viewpoint of ensuring an excellent balance between the mechanical properties, the shutdown property and the meltdown property, these layers are preferably laminated in the order: first microporous layer, second microporous layer, first microporous layer. A separator with an active layer on at least one side of a polyolefin multilayer microporous film composed of the three microporous layers laminated in this order will help to provide a power storage device with a high output characteristic that is less likely to have reduced ion permeability. Even with rapid temperature increase that occurs during abnormal heat release, a smooth shutdown property will be exhibited and the safety will tend to be excellent. When the polyolefin multilayer microporous film is composed of three microporous layers, "outermost sections" refers to the two first microporous layers constituting the outer sides of the polyolefin multilayer microporous film, and "innermost section" refers to the second microporous layer constituting the inner side.

(First microporous layer)

According to the present embodiment, the first microporous layer comprises a first polyolefin resin containing polyethylene and polypropylene. The first polyolefin resin is preferably composed of polyethylene and polypropylene. Refer to "(Outermost sections)" above, for the details regarding the first polyolefin resin in the first microporous layer.

(Second microporous layer)

According to the present embodiment, the second microporous layer comprises a second polyolefin resin containing polyethylene. The second polyolefin resin is preferably composed of polyethylene. Refer to "(Innermost section)" above, for the details regarding the second polyolefin resin in the second microporous film.

(Additives)

The polyolefin multilayer microporous film may contain desired additives. Such additives are not restricted and examples include polymers other than polyolefins; inorganic particles; phenol-based, phosphorus-based and sulfur-based antioxidants; metal soaps such as calcium stearate and zinc stearate; ultraviolet absorbers; light stabilizers; antistatic agents; anti-fogging agents; and color pigments.

The content of additives is preferably no greater than 20 parts by weight, more preferably no greater than 10 parts by weight and even more preferably no greater than 5 parts by weight, with 100 parts by weight as the total weight of the first and second polyolefin resin.

(Porosity)

There is no restriction on the lower limit for the porosity of the polyolefin multilayer microporous film, but it is preferably 20% or greater and more preferably 35% or greater, while the upper limit is preferably no greater than 90% and more preferably no greater than 80%. The porosity is preferably at least 20% because the ion permeability of the separator will be satisfactory. The porosity is also preferably no greater than 90% from the viewpoint of high ion permeability. The porosity can be calculated by the following formula:

$$\text{Porosity} = (\text{volume} - \text{weight/film density})/\text{volume} \times 100,$$

based on the volume ($cm^3$), weight (g) and film density ($g/cm^3$) of a measuring sample of the polyolefin multilayer microporous film. When the polyolefin multilayer microporous film is composed of polyethylene, for example, calculation may be performed assuming a film density of 0.95 ($g/cm^3$). When the polyolefin multilayer microporous film is composed of polyethylene and polypropylene, the same calculation can be performed using their respective film densities. The porosity can be adjusted by changing the draw ratio of the polyolefin multilayer microporous film.

(Gas permeability)

There is no particular restriction on the lower limit for the gas permeability of the polyolefin multilayer microporous film, but it is preferably 10 seconds/$100^{cm3}$ or greater and more preferably 50 seconds/100 $cm^3$ or greater, while the upper limit is preferably no greater than 1,000 seconds/$100cm^3$ and more preferably no greater than 500 seconds/100 $cm^3$. The gas permeability is preferably 10 seconds/100 cc or greater because this will allow self-discharge of the power storage device to be minimized. The gas permeability is preferably no greater than 1,000 seconds/100 cm$^3$ in order to allow a satisfactory charge-discharge characteristic to be obtained. The gas permeability is the air permeability resistance measured according to JIS P-8117. The gas permeability can be adjusted by changing the stretching temperature and/or draw ratio of the polyolefin multilayer microporous film.

(Pore diameter)

The polyolefin multilayer microporous film is preferably a porous film with fine pore diameters, having ionic conductivity without electrical conductivity, and also high resistance to organic solvents.

The upper limit for the mean pore size of the polyolefin multilayer microporous film is preferably no greater than 0.15 μm and more preferably no greater than 0.1 μm, while the lower limit is preferably 0.01 μm or greater. The mean pore size is preferably no greater than 0.15 μm in order to minimize self-discharge of the power storage device and prevent reduction in capacity. The mean pore size can be adjusted by changing the draw ratio during production of the polyolefin multilayer microporous film.

(Thickness)

There is no particular restriction on the lower limit for the thickness of the polyolefin multilayer microporous film, but it is preferably 2 μm or greater and more preferably 5 μm or greater, while the upper limit is preferably no greater than 100 μm, more preferably no greater than 60 μm and even more preferably no greater than 50 μm. A thickness of 2 μm or greater is preferred from the viewpoint of increasing the mechanical strength. On the other hand, a thickness of no greater than 100 μm is preferred from the viewpoint of increasing the capacity of the battery, since less of the volume of the battery will be occupied by the separator.

<Active layer>

The separator for a power storage device of the present embodiment comprises an active layer on at least one side of the polyolefin multilayer microporous film. The active layer of the present embodiment contains an acrylic-based resin and inorganic particles. With the active layer, adhesive force between the active layer and the electrode (electrode active material) will be stronger, and satisfactory thermal shock properties will be obtained.

(Acrylic-based resin)

The acrylic-based resin is a polymer comprising a (meth)acrylic-based compound as the monomer unit. A (meth)acrylic-based compound is at least one compound selected from the group consisting of (meth)acrylic acid and (meth)acrylic acid esters.

Examples of such compounds include compounds represented by the following formula (P1).

$$CH_2=CR^{Y1}\text{-}COO\text{-}R^{Y2} \qquad (P1)$$

In formula (P1), $R^{Y1}$ represents hydrogen or a methyl group, and $R^{Y2}$ represents hydrogen or a monovalent hydrocarbon group. When $R^{Y2}$ is a monovalent hydrocarbon group, it may be substituted, or it may have a heteroatom in the chain. Examples of monovalent hydrocarbon groups include straight-chain and branched linear alkyl, cycloalkyl and aryl groups. Examples of substituents include hydroxyl and phenyl groups, and examples of heteroatoms include halogen and oxygen atoms. A single (meth)acrylic-based compound may be used alone, or two or more may be used in combination.

Such (meth)acrylic-based compounds include (meth)acrylic acid, linear alkyl (meth)acrylates, cycloalkyl (meth)acrylates, (meth)acrylates with hydroxyl groups, and (meth)acrylates with phenyl groups.

More specifically, linear alkyl groups for $R^{Y2}$ include C1-3 linear alkyl groups such as methyl, ethyl, n-propyl and isopropyl groups; and C4 or greater linear alkyl groups such as n-butyl, isobutyl, t-butyl, n-hexyl, 2-ethylhexyl and lauryl groups. Examples of aryl groups for $R^{Y2}$ include phenyl groups.

Specific examples of (meth)acrylic acid ester monomers with such $R^{Y2}$ groups include (meth)acrylates with linear alkyl groups such as methyl acrylate, ethyl acrylate, propyl acrylate, isopropyl acrylate, butyl acrylate, isobutyl acrylate, t-butyl acrylate, n-hexyl acrylate, 2-ethylhexyl acrylate, lauryl acrylate, methyl methacrylate, ethyl methacrylate, propyl methacrylate, isopropyl methacrylate, butyl methacrylate, isobutyl methacrylate, t-butyl methacrylate, n-hexyl methacrylate, 2-ethylhexyl methacrylate and lauryl methacrylate; and (meth)acrylates with aromatic rings such as phenyl (meth)acrylate and benzyl (meth)acrylate.

Preferred among these are monomers with C4 or greater linear alkyl groups, and more specifically (meth)acrylic acid ester monomers in which $R^{Y2}$ is a C4 or greater linear alkyl group, from the viewpoint of increased adhesiveness with electrodes (electrode active materials), and from the viewpoint of ensuring a suitable difference between the solubility parameter (SP value) of the electrolyte solution and the SP value of the polymer, to minimize excessive swelling in the electrolyte solution and achieve a balance between the impact resistance and resistance of the power storage device. More specifically, it is preferably at least one selected from the group consisting of butyl acrylate, butyl methacrylate and 2-ethylhexyl acrylate. The upper limit for the number of carbon atoms of the C4 or greater linear alkyl group is not particularly restricted, and it may be up to 14, for example, although preferably no greater than 7. Such (meth)acrylic acid ester monomers may be used alone, or two or more may be used in combination.

The (meth)acrylic acid ester monomer also preferably comprises a monomer with a cycloalkyl group as $R^{Y2}$, either instead of or in addition to the monomer with a C4 or greater linear alkyl group. The presence of a bulky cycloalkyl group can minimize excessive swelling in electrolyte solutions, thereby further increasing the adhesiveness with electrodes.

Monomers with such cycloalkyl groups include, as more specific examples, cyclohexyl (meth)acrylate, isobornyl (meth)acrylate and adamantyl (meth)acrylate. The number of carbon atoms composing the alicyclic ring of the cycloalkyl group is preferably 4 to 8, more preferably 6 or 7, and most preferably 6. The cycloalkyl group may be substituted or unsubstituted. Examples of substituents include methyl and t-butyl groups. Preferred among these are one or more selected from the group consisting of cyclohexyl acrylate and cyclohexyl methacrylate, from the viewpoint of obtaining satisfactory polymerization stability when preparing the acrylic-based resin. They may be used alone or as combinations of two or more types.

The acrylic-based resin also preferably comprises a crosslinkable monomer as a (meth)acrylic acid ester monomer, either instead of or in addition to, but preferably in addition to, those mentioned above. There are no particular restrictions on crosslinkable monomers, and examples include monomers with two or more radicalpolymerizing double bonds, and monomers with a functional group that provides a self-crosslinking structure either during or after polymerization. They may be used alone or as combinations of two or more types.

Examples of monomers with two or more radicalpolymerizing double bonds include divinylbenzene and polyfunctional (meth)acrylates. The polyfunctional (meth)acrylate may be one or more types selected from the group consisting of bifunctional (meth)acrylates, trifunctional (meth)acrylates and tetrafunctional (meth)acrylates. Specific examples include polyoxyethylene diacrylate, polyoxyethylene dimethacrylate, polyoxypropylene diacrylate, polyoxypropylene dimethacrylate, neopentyl glycol diacrylate, neopentyl glycol dimethacrylate, butanediol diacrylate, butanediol dimethacrylate, trimethylolpropane triacrylate, trimethylolpropane trimethacrylate, pentaerythritol tetraacrylate and pentaerythritol tetramethacrylate. They may be used alone or as combinations of two or more types. Preferred among these are one or more selected from trimethylolpropane triacrylate and trimethylolpropane trimethacrylate, from the viewpoint of satisfactory polymerization stability during preparation of the acrylic-based resin.

Examples of monomers with functional groups that provide a self-crosslinking structure during or after polymerization include monomers with epoxy groups, monomers with methylol groups, monomers with alkoxymethyl groups and monomers with hydrolyzable silyl groups. Preferred monomers with epoxy groups include ethylenic unsaturated monomers with alkoxymethyl groups, with specific examples including glycidyl (meth)acrylate, 2,3-epoxycyclohexyl (meth)acrylate, 3,4-epoxycyclohexyl (meth)acrylate and allyl glycidyl ether.

Examples of monomers with methylol groups include N-methylolacrylamide, N-methylolmethacrylamide, dimethylolacrylamide and dimethylolmethacrylamide.

A monomer with an alkoxymethyl group is preferably an ethylenic unsaturated monomer with an alkoxymethyl group, with specific examples including N-methoxymethylacrylamide, N-methoxymethylmethacrylamide, N-butoxymethylacrylamide and N-butoxymethylmethacrylamide.

Examples of monomers with hydrolyzable silyl groups include vinylsilane, $\gamma$-acryloxypropyltrimethoxysilane, $\gamma$-acryloxypropyltriethoxysilane, $\gamma$-methacryloxypropyltrimethoxysilane and $\gamma$-methacryloxypropyltriethoxysilane. They may be used alone or as combinations of two or more types.

The acrylic-based resin further comprises a monomer other than those mentioned above, as a monomer unit, for various modifications to the quality and physical properties. Examples of such monomers include monomers with carboxyl groups (excluding (meth)acrylic acid), monomers with amide groups, monomers with cyano groups, monomers with hydroxyl groups , monomers that form urethane groups, and aromatic vinyl monomers.

Various vinyl-based monomers with functional groups such as sulfonic acid and phosphate groups, as well as vinyl acetate, vinyl propionate, vinyl versatate, vinylpyrrolidone, methylvinyl ketone, butadiene, ethylene, propylene, vinyl chloride and vinylidene chloride, may also be used as necessary.

They may be used alone or as combinations of two or more types. These other monomers may also be any belonging to two or more of each of the monomer groups mentioned above.

(Meth)acrylamide is an example of a monomer with an amide group. Monomers with cyano groups are preferably ethylenic unsaturated monomers with cyano groups, a specific example being (meta)acrylonitrile. An example of a monomer with a hydroxyl group is 2-hydroxyethyl (meth)acrylate.

Examples of aromatic vinyl monomers include styrene, vinyltoluene and α-methylstyrene, with styrene being preferred.

Acrylic-based resins can be obtained by common emulsion polymerization, for example. There are no particular restrictions on the method of emulsion polymerization, and any publicly known method may be employed.

For example, an acrylic-based resin can be obtained by polymerizing a monomer composition containing each of the monomers in a dispersed system containing the monomers, a surfactant, a radical polymerization initiator and other additive components as necessary, as the basic components, in an aqueous medium. Various methods may be utilized as necessary for the polymerization, such as a method in which the makeup of the supplied monomer composition is kept constant during the entire polymerization process, or a method in which it is successively or continuously varied during the polymerization process to create morphological variation in the particles of the resin dispersion that is produced.

The surfactant is a compound having at least one hydrophilic group and at least one lipophilic group in the molecule. The various types of surfactants available include non-reactive surfactants and reactive surfactants, with reactive surfactants being preferred, anionic reactive surfactants being more preferred, and reactive surfactants with sulfonic acid groups being even more preferred.

These surfactants are preferably used at 0.1 to 5 parts by weight with respect to 100 parts by weight of the monomer composition. One type of surfactant may be used alone, or two or more may be used in combination.

As radical polymerization initiators there may be used any inorganic initiators or organic initiators that undergo radical decomposition by heat or reducing substances to initiate addition polymerization of monomers. Either water-soluble or oil-soluble polymerization initiators may be used as radical polymerization initiators.

The radical polymerization initiator may be used at, preferably, 0.05 to 2 parts by weight with respect to 100 parts by weight of the monomer composition. A single type of radical polymerization initiator may be used, or two or more may be used in combination.

From the viewpoint of ion permeability, the acrylic-based resin preferably comprises a copolymer having an ethylenic unsaturated monomer with a polyalkyleneglycol group as a monomer unit. The ethylenic unsaturated monomer with a polyalkyleneglycol group is copolymerizable with monomers that do not have polyalkyleneglycol groups. Polyalkyleneglycol groups are also known as polyoxyalkylene groups, and examples include polyoxymethylene, polyoxyethylene, polyoxypropylene and polyoxybutylene. The number of carbon atoms of the oxyalkylene group in a polyoxyalkylene group is preferably 1 to 6, more preferably 1 to 3 and even more preferably 2. The hydrocarbon group in a polyalkyleneglycol group may be either straight-chain or branched.

The average number of repeating units (n) for the alkyleneglycol units in the ethylenic unsaturated monomer with a polyalkyleneglycol group is not particularly restricted, but is preferably 1 or greater and more preferably 3 or greater, and preferably no greater than 100, more preferably no greater than 30, even more preferably no greater than 15 and most preferably no greater than 8. If the average number of repeating units is at least 3, the ion permeability of the copolymer will tend to be higher. If the average number of repeating units is no greater than 15, the copolymerizability with monomers that have no polyalkyleneglycol groups will be higher in emulsion polymerization.

Examples for the ethylenic unsaturated monomer with a polyalkyleneglycol group (P2) include polyalkyleneglycol mono(meth)acrylate, polyalkyleneglycol di(meth)acrylate, and monomers having reactive substituents such as polyalkylene glycol units and allyl groups in the molecule.

Examples of polyalkyleneglycol mono(meth)acrylates include (meth)acrylic acid ester monomers with polyalkyleneglycol groups, such as polyethyleneglycol (meth)acrylate, polypropyleneglycol (meth)acrylate, polyethyleneglycol-polypropylene glycol (meth)acrylate, polyethyleneglycol-polybutylene glycol (meth)acrylate, polypropyleneglycol-polybutyleneglycol (meth)acrylate, 2-ethylhexylpolyethyleneglycol mono(meth)acrylate, phenoxydiethyleneglycol mono(meth)acrylate, phenoxypolyethyleneglycol mono(meth)acrylate, methoxypolyethylene glycol (meth)acrylate, methoxydiethyleneglycol mono(meth)acrylate, ethoxypolyethylene glycol (meth)acrylate, butoxypolyethylene glycol (meth)acrylate, octoxypolyethylene glycol (meth)acrylate, lauroxypolyethylene glycol (meth)acrylate, stearoxypolyethylene glycol (meth)acrylate, phenoxypolyethylene glycol (meth)acrylate, methoxypolypropylene glycol (meth)acrylate and octoxypolyethylene glycol-polypropylene glycol (meth)acrylate, these being preferred from the viewpoint of more effectively and reliably solving the problem of the invention. In addition to these, monomer (P2) also includes compounds that are reactive surfactants with polyalkylene glycol chains. Methoxydiethyleneglycol mono(meth)acrylate, methoxypolyethyleneglycol mono(meth)acrylate, butoxypolyethyleneglycol mono(meth)acrylate, 2-ethylhexylpolyethyleneglycol mono(meth)acrylate and methoxypolypropyleneglycol mono(meth)acrylate are preferred among the monomers (P2) from the viewpoint of satisfactory polymerization stability during preparation of the copolymer.

Polyalkyleneglycol di(meth)acrylates include polyethyleneglycol di(meth)acrylate, polypropyleneglycol di(meth)acrylate and polyethylene glycolpolypropyleneglycol di(meth)acrylate.

Examples of monomers with a polyalkylene glycol unit and an allyl group in the molecule include polyalkyleneglycol monoallyl ethers, and specifically polyethyleneglycol monoallyl ether or polypropyleneglycol monoallyl ether may be used.

The acrylic-based resin may be one with a core/shell structure. A core/shell structure means that the polymer has a double structure form, made of a composition in which the polymer belonging to the core portion and the polymer belonging to the shell portion are different. In a core-shell structure, a polymer with a high glass transition temperature and a polymer with a low glass transition temperature are combined to allow control of the glass transition temperature of the acrylic-based resin as a whole. Specifically, it allows the handling properties of the separator to be improved (see comparison between Example 2 and Example 9 below). Multiple functions can thus be imparted to the thermoplastic polymer as a whole.

Commercially available acrylic-based resins may be used for the acrylic-based resin. Examples of commercially available products include POVACOAT[R] by Nissin Kasei Co., Ltd., JURYMER[R] AT-510, ET-410, FC-60, SEK-301 by Toagosei Co., Ltd., UW-223SX and UW-550CS by Taisei Fine Chemical Co., Ltd., and WE-301, EC-906EF and CG-8490 by DIC. Preferred among these are POVACOAT and WE-301, from the viewpoint of both peel strength between the active layer and substrate, and ion permeability.

The active layer may also contain other resins in addition to the acrylic-based resin described above, so long as the properties exhibited by the separator of the present embodiment are not impaired. Examples of other resins include polyvinylidene fluoride, polyvinylidene fluoride-trichloroethylene, polymethyl methacrylate, polyacrylonitrile, polyvinyl acetate, ethylenevinyl acetate copolymer, polyimide and polyethylene oxide. Other resins may be used alone or in mixtures of two or more, and there is no limitation to these.


(Inorganic particles)

The inorganic particles are not restricted, but preferably they have a melting point of 200°C or higher and also high electrical insulating properties, and are also electrochemically stable in the range in which the lithium-ion secondary battery is to be used.

The inorganic particles are not limited, and examples include oxide-based ceramics such as alumina ($Al_2O_3$), silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, aluminum hydroxide, aluminum hydroxide oxide (AlO(OH)), potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. They may be used alone, or more than one type may be used together.

Preferred inorganic particles among those mentioned above, from the viewpoint of improving the electrochemical stability and the heat-resistant properties of the separator, are aluminum silicate compounds without ion-exchange properties, which include aluminum oxide compounds such as alumina and aluminum hydroxide oxide; as well as kaolinite, dickite, nacrite, halloysite and pyrophyllite.

Alumina types include a large number of crystalline forms such as α-alumina, β-alumina, γ-alumina and θ-alumina, any of which may be used. Because α-alumina is thermally and chemically stable, it is preferably used.

Aluminum hydroxide oxide (AlO(OH)) is preferred as an aluminum oxide compound. Boehmite is a more preferred aluminum hydroxide oxide from the viewpoint of preventing internal short circuiting caused by generation of lithium dendrites. By using boehmite as the inorganic particles, it is possible to provide an extremely lightweight active layer while maintaining high permeability, so that heat contraction at high temperature can be minimized and excellent heat resistance can be obtained, even when the active layer is thin. Synthetic boehmite is even more preferred because it can reduce ionic impurities that may adversely affect the properties of the power storage device.

Kaolin composed of kaolin mineral is more preferred as an aluminum silicate compound without ion-exchange properties, from the viewpoint of cost and availability. Wet kaolin, and calcined kaolin obtained by its firing, are examples of kaolin, with calcined kaolin being more preferred. Calcined kaolin is especially preferred from the viewpoint of electrochemical stability, because the water of crystallization has already been released by firing, and the level of impurities is low.

The mean particle diameter of the inorganic particles is preferably greater than 0.01 μm and up to 4.0 μm, more preferably greater than 0.2 μm and up to 3.5 μm, and even more preferably greater than 0.4 μm and up to 3.0 μm. The mean particle diameter of the inorganic particles is preferably greater than 0.01 μm and up to 4.0 μm, in order to minimize heat shrinkage at high temperature even when the active layer is thin (for example, 7 μm or smaller). The method of adjusting the particle diameters and particle size distribution of the inorganic particles may be, for example, a method of pulverizing the inorganic particles using a suitable pulverizing apparatus such as a ball mill, bead mill or jet mill to reduce their particle diameters.

Examples for the shapes of the inorganic particles include scaly, needle-like, columnar, spherical, polyhedral and globular. The inorganic filler shapes may be of only one of these types, or a combination of two or more.

The content of inorganic particles in the active layer may be determined as appropriate from the viewpoint of the binding properties of the inorganic particles, the permeability of the separator, and the heat resistance. The content of inorganic particles in the active layer is preferably between 50 weight% and 95 weight%, inclusive, more preferably between 50 weight% and 90 weight%, inclusive, and even more preferably between 60 weight% and 90 weight%, inclusive, based on the total weight of the active layer. The content of the inorganic particles is preferably between 50 weight% and 95 weight%, inclusive, in order to achieve both adhesion between the separator and electrode, and low film resistance for the separator.

The weight ratio of the acrylic-based resin and the inorganic particles in the active layer is 10/90 to 50/50 and preferably 10/90 to 40/60 (acrylic-based resin/inorganic particles). The weight ratio of acrylic-based resin/inorganic particles as indicated achieves for both the active layer/substrate peel strength and the separator handling properties.

(Thickness)

The thickness of the active layer is preferably 0.5 $\mu$m or greater from the viewpoint of heat resistance and insulating properties, and it is preferably no greater than 50 $\mu$m from the viewpoint of increasing the battery capacity and the ion permeability.

(Bulk density)

The layer density of the active layer is preferably 0.5 g/cm$^3$ to 3.0 g/cm$^3$ and more preferably 0.7 g/cm$^3$ to 2.0 g/cm$^3$. If the layer density of the active layer is at least 0.5 g/cm$^3$ the heat shrinkage factor at high temperature will tend to be satisfactory, and if it is 3.0 g/cm$^3$ or lower the gas permeability will tend to be reduced.

<Physical properties of separator for power storage device>

The gas permeability of the separator for a power storage device is preferably between 10 seconds/100 cm$^3$ and 650 seconds/100 cm$^3$ inclusive, more preferably between 20 seconds/100cm$^3$ and 500 seconds/100 cm$^3$, inclusive, even more preferably between 30 seconds/100cm$^3$ and 450 seconds/100cm$^3$, inclusive, and most preferably between 50 seconds/100 cm$^3$ and 400 seconds/100 cm$^3$ inclusive. The gas permeability is the air permeability resistance measured according to JIS P-8117, similar to the gas permeability of the polyolefin porous substrate.

If the gas permeability of the separator for a power storage device is at least 10 seconds/100cm$^3$, self-discharge will tend to be reduced, and if it is 650 seconds/100 cm$^3$ or shorter, a satisfactory charge-discharge characteristic will tend to be obtained. According to this embodiment, the separator for a power storage device which exhibits such extremely high gas permeability is able to exhibit high ion permeability when it is used in a lithium-ion secondary battery.

The thickness of the separator for a power storage device (that is, the total thickness including the polyolefin multilayer microporous film and the active layer) is preferably between 2 $\mu$m and 200 $\mu$m, inclusive, more preferably between 5 $\mu$m and 100 $\mu$m, inclusive and even more preferably between 7 $\mu$m and 30 $\mu$m, inclusive. If the thickness is at least 2 $\mu$m it will be possible to adequately ensure mechanical strength, and if it is no greater than 200 $\mu$m, the volume occupied by the separator will be reduced, which is preferable from the standpoint of increasing the capacity of the battery.

<Method for producing separator for power storage device>

<Method for producing polyolefin multilayer microporous film>

The method for producing the first and second microporous films is not particularly restricted, and any publicly known production method may be employed. Examples include a method of melt kneading a polyolefin resin composition and a plasticizer and molding the mixture into a sheet, optionally with stretching, and then extracting the plasticizer to form pores; a method of melt kneading a polyolefin resin composition, extruding it at a high draw ratio, and then stretching it with heat treatment to detach the polyolefin crystal interface and form pores; a method of melt kneading a polyolefin resin composition and an inorganic filler and molding the mixture into a sheet, and then detaching the interface between the polyolefin and the inorganic filler by stretching to form pores; and a method of first dissolving the polyolefin resin composition, and then dipping it in a poor solvent for the polyolefin to solidify the polyolefin while removing the solvent, to form pores.

The first and second microporous films may be created in the form of nonwoven fabrics or paper sheets using, for example, a chemical bond method in which a web is immersed in a binder and dried to produce bonding between the fibers; a thermal bond method in which heatfusible fibers are mixed into a web and the fibers are partially melted to produce bonding between the fibers; a needle punching method in which a web is repeatedly pierced with a puncturing needle to mechanically tangle the fibers; or a hydroentangling method in which a highpressure water stream is sprayed from a nozzle onto a web through a net (screen), producing tangling between the fibers.

An example of a method of producing the polyolefin multilayer microporous film will now be described, as a method of melt kneading a polyolefin resin composition and a plasticizer and forming first and second microporous layer sheets, and processing them by extraction of the plasticizer to laminate first and second microporous layers.

First, a starting composition comprising a polyolefin resin composition and a plasticizer are melt kneaded. In the melt kneading method, a polyolefin resin and other additives as necessary may be loaded into a resin kneader such as an extruder, kneader, Laboplastomil, kneading roll or Banbury mixer, and the plasticizer introduced at a desired proportion and kneaded in while hot melting the resin components. Before loading the polyolefin resin, plasticizer and other additives into the resin kneader, the starting materials are preferably pre-kneaded in a prescribed proportion using a Henschel mixer or the like. More preferably, only a portion of the plasticizer is loaded in during the pre-kneading, while the remainder of the plasticizer is kneaded in while side feeding it to the resin kneader.

The plasticizer used may be a non-volatile solvent that can form a homogeneous solution at or above the melting point of the polyolefin. Specific examples of such non-volatile solvents include hydrocarbons such as liquid paraffin and paraffin wax; esters such as dioctyl phthalate and dibutyl phthalate; and higher alcohols such as oleyl alcohol and stearyl alcohol, with liquid paraffin being preferable among these.

The proportion of the polyolefin resin composition and the plasticizer in the starting composition is not particularly restricted so long as it is in a range in which they can undergo uniform melt kneading to be molded into a sheet form. The plasticizer content is, for example, preferably 30 to 80 weight% and more preferably 40 to 70 weight% based on the total weight of the starting composition. The plasticizer content is preferably 30 to 80 weight% in order to obtain both melt tension during melt molding and a homogeneous and fine pore structure.

The obtained melt kneaded mixture is then formed into a sheet. The method of producing the molded sheet may be, for example, a method of extruding the melt kneaded mixture through a T-die or the like into a sheet, and contacting it with a heat conductor to cool it to a sufficiently lower temperature than the crystallization temperature of the resin component, thereby solidifying it. The heat conductor used for the cooling solidification may be metal, water, air or the plasticizer itself, but it is preferably a metal roll from the viewpoint of high heat conduction efficiency. When the melt kneaded mixture is contacted with metal rolls, it is preferably sandwiched between the metal rolls because this will allow the heat to be more efficiently transferred and will cause the sheet to become oriented, thus increasing the film strength, while the surface smoothness of the sheet will also be improved. The die lip gap when extruding the melt kneaded mixture through a T-die into the form of a sheet is preferably between 400 μm and 3,000 μm, inclusive, and more preferably between 500 μm and 2,500 μm, inclusive.

The first microporous layer and second microporous layer can be obtained in this manner. An example of a method for laminating the obtained microporous layers in the order: first microporous layer, second microporous layer, first microporous layer, is a bulk three-layer laminating method in which the three layers are produced and laminated in parallel, or a method in which the two first microporous layers and the second microporous layer are separately produced and then laminated.

A bulk three-layer laminating method will now be explained. The starting composition for the first microporous layer and the starting composition for the second microporous layer may be melt kneaded in parallel using separate twin-screw extruders, each melt kneaded mixture being supplied from the respective twin-screw extruder to a single three-layer-forming T-die, and while adjusting the layer thickness ratio of each layer from each melt kneaded mixture (= first melt kneaded mixture layer/second melt kneaded mixture layer/first melt kneaded mixture layer) to the desired range, the layers may be cooled while taking them up at a prescribed takeup speed, to form a gel-like three-layer sheet.

Preferably, the obtained gel-like three-layer sheet is subsequently stretched. The stretching treatment used may be either uniaxial stretching or biaxial stretching. Biaxial stretching is preferred from the viewpoint of the strength of the obtained polyolefin multilayer microporous film. Carrying out high-ratio stretching of the molded sheet in biaxial directions is preferred because the molecules will become oriented in the inplane direction and the polyolefin multilayer microporous film that is obtained at the end of the process will be less likely to tear. Examples of biaxial stretching methods include simultaneous biaxial stretching, sequential biaxial stretching, multistage stretching and repeated stretching. Simultaneous biaxial stretching is preferred from the viewpoint of increasing the strength and obtaining greater uniformity during stretching, and superior shutdown properties.

The draw ratio, in terms of area increase, is preferably between 20 and 100, inclusive, and more preferably between 25 and 50, inclusive. The draw ratio in each axial direction is preferably in the range of between 4 and 10, inclusive, in the MD direction and between 4 and 10, inclusive, in the TD direction, and more preferably in the range of between 5 and 8, inclusive, in the MD direction and between 5 and 8, inclusive, in the TD direction. The increase in total area is preferably within this range, because it will be possible to impart sufficient strength while preventing film breakage in the stretching step and obtaining high productivity.

The stretched molded sheet may also be subjected to rolling. Rolling may be carried out, for example, by a press method using a double belt press machine or the like. Rolling can increase the orientation of the surface layer sections. The rolling area increase is preferably greater than 1 and no greater than 3, and more preferably greater than 1 and no greater than 2. The area increase by rolling is preferably within this range from the viewpoint of increasing the film strength of the polyolefin multilayer microporous film and allowing formation of a porous structure that is uniform in the thickness direction of the film.

The plasticizer may then be removed from the molded sheet that has been stretched, or stretched and rolled, to obtain a polyolefin multilayer microporous film. The method of removing the plasticizer may be, for example, a method of immersing the molded sheet in an extraction solvent to extract the plasticizer, and then thoroughly drying it. The method of extracting the plasticizer may be either a batch process or a continuous process. In order to minimize contraction of the polyolefin multilayer microporous film, it is preferred to constrain the edges of the molded sheet during the immersion and drying procedures. The residue of the plasticizer in the polyolefin multilayer microporous film is preferably less than 1 weight%.

The extraction solvent used is preferably one that is a poor solvent for the polyolefin resin and a good solvent for the plasticizer, and that has a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. The extraction solvent may be collected by a process such as distillation and then reutilized.

In order to minimize contraction of the polyolefin multilayer microporous film, heat treatment such as heat setting or thermal relaxation may be carried out, either after the stretching step or after formation of the polyolefin multilayer microporous film.

The obtained polyolefin multilayer microporous film may be subjected to surface treatment by hydrophilicizing treatment with a surfactant, or crosslinking treatment with ionizing radiation. Surface treatment is preferably carried out because subsequent coating of the coating solution for the active layer will be facilitated, and adhesion between the polyolefin and active layer will be increased. The method of surface treatment may be, for example, corona discharge treatment, plasma treatment, mechanical roughening, solvent treatment, acid treatment or ultraviolet oxidation.

<Method of forming active layer>

The method of forming the active layer is not particularly restricted so long as the necessary layer thickness and coating area can be obtained. For example, the active layer can be formed by coating at least one side of the polyolefin multilayer microporous film (hereunder also referred to as "substrate") with a coating solution comprising an acrylic-based resin, optionally inorganic particles and, if desired, a solvent such as water, and additional components such as a dispersing agent.

The method of coating the coating solution onto the substrate is not particularly restricted so long as the necessary layer thickness and coating area can be obtained. Examples for the coating method include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods, spray coating methods and ink-jet coating methods. Preferred among these are gravure coater methods, because they allow a high degree of freedom for the coating shape.

Alternatively, the starting material for the active layer and the starting material for the polyolefin multilayer microporous film may be extruded and laminated all at once by a co-extrusion method, or the polyolefin multilayer microporous film and the active layer may be attached after being separately formed.

The method of removing the solvent from the coated film after coating is not particularly restricted so long as it does not adversely affect the substrate or the porous layer. For example, it may be a method of drying at a temperature below the melting point of the substrate while the substrate is anchored, or a method of reduced pressure drying at low temperature.

<Power storage device>

The separator for a power storage device of the present embodiment may be combined with a positive electrode, a negative electrode and a non-aqueous electrolyte solution to provide a laminated body and roll that can be used in a power storage device. Examples of power storage devices include secondary batteries, such as lithium-ion secondary batteries, for example. A lithium-ion secondary battery with a separator for a power storage device according to the present embodiment will now be described for the purpose of illustration.

The positive electrode, negative electrode and non-aqueous electrolyte solution that are used may be publicly known elements.

The positive electrode used may be a positive electrode having a positive electrode active material layer comprising a positive electrode active material formed on a positive electrode collector. The positive electrode collector may be aluminum foil, for example. The positive electrode active material may be a lithiumcontaining complex oxide such as $LiCoO_2$, $LiNiO_2$, spinel $LiMnO_4$ or olivine-type $LiFePO_4$, for example. The positive electrode active material layer may include a binder and a conductive material in addition to the positive electrode active material.

The negative electrode used may be a negative electrode having a negative electrode active material layer comprising a negative electrode active material formed on a negative electrode collector. The negative electrode collector may be copper foil, for example. Examples for the negative electrode active material include carbon materials such as graphite, nongraphitizable carbon material, easily graphitizable carbon material and complex carbon; or silicon, tin, metal lithium and various alloy materials.

There are no particular restrictions on the non-aqueous electrolyte solution, and an electrolyte solution comprising an electrolyte dissolved in an organic solvent may be used. Examples of organic solvents include propylene carbonate, ethylene carbonate, dimethyl carbonate, diethyl carbonate and ethylmethyl carbonate. Examples of electrolytes include lithium salts such as $LiClO_4$, $LiBF_4$ and $LiPF_6$.

There are no particular restrictions on the method of producing a power storage device using the separator for a power storage device of the present embodiment. The following methods may be mentioned as examples.

The separator for a power storage device of the present embodiment is produced with a longitudinal shape having preferably a width of 10 to 500 mm and a length of 200 to 4,000 m and more preferably a width of 80 to 500 mm and a length of 1,000 to 4,000 m, and multiple separators may be laminated in the order: positive electrode-separator-negative electrode-separator, or negative electrode-separator-positive electrode-separator, to obtain a laminated body. The obtained laminated body may be rolled in a circular or flat spiral manner to obtain a roll. The obtained laminated body or roll may be housed in an exterior body together with an electrolyte solution to produce a power storage device. The exterior body may be, for example, a metal can, or a laminate film such as an aluminum film.

The laminated body or roll is also preferably further pressed. Specifically, the separator for a power storage device of the present embodiment may be overlaid and pressed with an electrode having a collector and an active material layer formed on at least one side of the collector. The pressing temperature may be between 25°C and 120°C, or 50°C to 100°C, for example. The pressing may be carried out using a publicly known press apparatus such as a roll press or surface press.

[Examples]

Embodiments of the invention will now be explained in detail through examples and comparative examples

<Measuring methods and evaluation methods>

(1) Peel strength between active layer and substrate

A piece of 12 mm width × 100 mm length tape (Scotch[R] 600, product name of 3M) was attached to the active layer of the separator obtained in each of the examples and comparative examples, parallel to the lengthwise direction of the separator. The force required to peel the tape from the active layer at a speed of 50 mm/min was measured using a 90° peel strength meter (product name: IP-5N by Imada). The average value of the peel strength obtained by measurement at 5 points was taken as the peel strength between the adhesive layer and substrate, and was evaluated using the following evaluation criteria.

(Evaluation criteria)

A: Peel strength of ≥50 N/m
B: Peel strength of ≥40 N/m and <50 N/m
C: Peel strength of <40 N/m

(2) Handling properties of separator (blocking resistance and ordinary temperature peel strength test)

Two samples were prepared by cutting to sizes of 20 mm × 100 mm from each separator obtained in the examples and comparative examples. These were overlaid and then pressed for 3 minutes at a temperature of 25°C and a pressure of 5 MPa. The 90° peel strength between the separators for the pressed samples was measured at a pull rate of 50 mm/min using ZP5N and MX2-500N Force Gauges (product names) by Imada Co., Ltd. Evaluation was made according to the following criteria based on the peel strength values.

(Evaluation criteria)

A: Peel strength of <30 N/m
B: Peel strength of ≥30 N/m and <40 N/m
C: Peel strength of ≥40 N/m

(3) Thermal shock properties

The separators obtained in the examples and comparative examples were used for evaluation of the thermal shock properties (thermal resistant cycle characteristics) of secondary batteries assembled according to a. to d. below.

a. Fabrication of positive electrode

After dry blending 96 parts by weight of lithium cobaltate ($LiCoO_2$) as a positive electrode active material, 2 parts by weight of carbon black powder as a positive electrode conductive agent and 2 parts by weight of polyvinylidene fluoride as a positive electrode binder (binder), the blend was dispersed in N-methylpyrrolidone (NMP) to prepare a positive electrode mixture slurry. The positive electrode mixture slurry was coated onto both sides of a 13 μm-thick aluminum foil as the positive electrode collector, and after drying, it was rolled to fabricate a positive electrode. The packing density and thickness of the positive electrode active material layer were 3.95 $g/cm^3$ and 140 μm, respectively, at the sections where the positive electrode active material layer had been formed on both sides of the collector.

b. Fabrication of negative electrode

A mixture was prepared comprising 97 parts by weight of a carbon-based active material (artificial graphite) and 3 parts by weight of a silicon-based active material ($SiO_x$) (x = 1.05). After then combining 98 parts by weight of this mixture with 1 part by weight of carboxymethyl cellulose sodium (CMC-Na) and 1 part by weight of polyvinylidene fluoride (PVDF) microparticles, the resulting mixture was dispersed in water to obtain a negative electrode mixture slurry. The negative electrode mixture slurry was coated onto both sides of an 8 μm-thick copper foil as a negative electrode collector, and then dried and rolled. The rolled negative electrode mixture was then heated at 170°C, as a temperature above the melting point of PVDF. This caused the PVDF microparticles to fuse with the surfaces of the carbon-based active material and the silicon-based active material. A negative electrode was fabricated by the steps described above. The packing density and thickness of the negative electrode active material layer were 1.75 $g/cm^3$ and 137 μm, respectively, at the sections where the negative electrode active material layer had been formed on both sides of the collector.

c. Preparation of non-aqueous electrolyte solution

A non-aqueous electrolyte solution was prepared by dissolving 1.2 mol/L concentrated $LiPF_6$, as a solute, in a mixed solvent of ethylene carbonate:diethyl carbonate = 3:7 (weight ratio).

d. Battery assembly

After cutting the positive electrode fabricated in a., the negative electrode fabricated in b. and the separators obtained in the examples and comparative examples, and laminating them, they were rolled in the machine direction at room temperature and pressed, to fabricate flat rolls (battery elements). Each battery element was inserted into a 120 μm-thick laminate film comprising a triple layer of polypropylene/aluminum/nylon, from the inside toward the outside, and was heat-fused leaving one side of the exterior member unfused. The non-aqueous electrolyte solution prepared in c. was injected into the exterior member housing the battery element, and the remaining side of the exterior member was heat-fused under reduced pressure for reduced pressure sealing. This was heated at 80°C for 3 minutes between metal sheets to obtain a 2 mm-thick × 30 mm-wide × 30 mm-high secondary battery.

The obtained secondary battery was charged to 4.35 V at a constant current of 56 mA at 25°C, and then constant voltage charging was carried out to a charging current of 14 mA. The resistance of the secondary battery in the discharged state after constant voltage charge (1 kHz alternating current impedance: Ω) was measured, and the resistance was recorded as the initial resistance.

Using a thermal shock tester (TSA-71H-W by Espec Corp.), the temperature was then raised to 70°C and held for 4 hours. The battery was then held at 20°C for 2 hours and subsequently held at -40°C for 4 hours, as a cycle that was repeated 50 times. The resistance of the secondary battery (1 kHz alternating current impedance: Ω) was measured by the same method as d. above. From these results and the initial resistance measured in d., the amount of resistance variation before and after thermal cycling (resistance after thermal cycling - initial resistance) was calculated and evaluated according to the following criteria.

(Evaluation criteria)

A: Resistance variation before and after thermal shock: $\geq 0 \, \Omega$ and $< 20 \, \Omega$
B: Resistance variation before and after thermal shock: $\geq 20 \, \Omega$ and $< 40 \, \Omega$
C: Resistance variation before and after thermal shock: $\geq 40 \, \Omega$

(4) Low-temperature cycle characteristics

The separators obtained in the examples and comparative examples were used for evaluation of the low-temperature cycle characteristics of secondary batteries assembled according to a. to c. below.

a. Fabrication of positive electrode

In a dual-arm kneading machine there were stirred and kneaded 100 parts by weight of lithium cobaltate as a positive electrode active material, 2 parts by weight of acetylene black as a conductive agent and 2 parts by weight of polyvinylidene fluoride as a binder, together with a suitable amount of N-methyl-2-pyrrolidone, to prepare a positive electrode coating material mixture. The obtained positive electrode coating material mixture was coated and dried onto both sides of a 20 $\mu$m-thick Al foil as the positive electrode collector to form positive electrode active material layers. This was pressed and rolled with a pair of rollers to obtain a positive electrode with a total thickness of 120 $\mu$m. On one side of the positive electrode collector in the short direction, an exposed portion of the positive electrode collector was provided without the positive electrode active material layer.

b. Fabrication of negative electrode

In a dual-arm kneading machine there were stirred 100 parts by volume of artificial graphite as a negative electrode active material, 2.3 parts by volume of a styrene-butadiene copolymer rubber particle dispersion as a binder, in terms of the solid binder, and 1.4 parts by volume of carboxymethyl cellulose as a thickener, together with a prescribed amount of water, to prepare a negative electrode coating material mixture with a volume solid content of 55%. The volume solid content is the volume concentration of solids in the coating material mixture. The obtained negative electrode coating material mixture was coated and dried onto both sides of a 15 $\mu$m-thick copper foil as the negative electrode collector, and then rolled to obtain a negative electrode with a total thickness of 185 $\mu$m. On one side of the negative electrode collector in the short direction, an exposed portion of the negative electrode collector was provided without the negative electrode active material layer.

c. Fabrication of battery

The positive electrode fabricated in a., each of the separators obtained in the examples and comparative examples, and the negative electrode fabricated in b., were laminated and rolled to obtain a roll, and the roll was inserted into a cylindrical battery case. An electrolyte solution (5.5 g) comprising 1 M LiPF$_6$ and 3 parts by weight of VC dissolved in a mixed solvent of EC (ethylene carbonate)/DMC (dimethyl carbonate)/MEC (methylethyl carbonate), was poured into the cylindrical battery case and the opening was sealed to fabricate a cylindrical 18650 non-aqueous secondary battery with a design capacity of 2000 mAh.

d. Measurement of low-temperature cycle characteristic

The capacity retention at 100 cycles of low temperature was measured by the following method. Run-in charge-discharge of the sealed battery was carried out twice, and after storing it for 7 days in an environment at 45°C, the following charge-discharge cycle was repeated 100 times at -30°C. Charge was with a constant voltage of 4.2 V and charging at 1400 mA, the charge being completed when the charging current fell to 100 mA, while discharge was discharging at a constant current of 2000 mA to a final voltage of 3 V, and with this as 1 cycle, the service capacity ratio at the 100th cycle with respect to the 1st cycle was measured as the 100-cycle capacity retention. The low-temperature cycle characteristic was evaluated according to the following criteria.

(Evaluation criteria)

A: Capacity retention of ≥70% at 100 low temperature cycles
B: Capacity retention of ≥60% and <70% at 100 low temperature cycles
C: Capacity retention of <60% at 100 low temperature cycles

(5) Variation in peel strength between active layer and substrate

In a similar manner as "(1) Peel strength between active layer and substrate" above, 12 mm width × 100 mm length tape (Scotch$^R$ 600, product name of 3M) was attached to each of the 600 mm-wide separators obtained in the examples and comparative examples at 5 points across 100 mm spacings, parallel to the lengthwise direction of the separator (the TD direction). Similarly, the tape was attached at 5 points across 500 mm spacings in the direction perpendicular to the lengthwise direction of the separator (the MD direction). The force required to peel the attached tape from the sample at a speed of 50 mm/min was measured using a 90° peel strength meter (product name: IP-5N by Imada). The peel strength variation [%] was calculated from the standard deviation and mean value of the peel strengths, based on the following formula, and evaluated by the following criteria.

[Mathematical Formula 1]

$$\text{Standard deviation of peel strength } \sigma = \sqrt{\frac{n\sum x^2 - (\sum x)^2}{n^2}}$$

$$\text{Peel strength variation} = \sigma/x \times 100 \ (\%)$$

Here, x represents the mean peel strength, and n represents the number of measurements.

(Evaluation criteria)

A: Variation of <15% in active layer/substrate peel strength
B: Variation of ≥15% and <25% in active layer/substrate peel strength
C: Variation of ≥25% in active layer/substrate peel strength

(6) Impact resistance (impact test)

Fig. 1 is a schematic diagram illustrating an impact test according to UL Standard 1642 and/or 2054. In the manner described by UL standard 1642 and/or 2054, a round bar ($\phi$ = 15.8 mm) was set on a sample disposed on a test stand, so that the sample and the round bar were generally perpendicular, and a 9.1 kg (approximately 20 lb) deadweight was dropped onto the top surface of the round bar from a position at a height of 610 ±25 mm from the round bar, to observe the effect of impact on the sample. The procedure for the impact test in the Examples will now be explained with reference to Fig. 1 and UL standard 1642 and 2054.

a. Fabrication of positive electrode

After mixing 90.4 weight% of a nickel, manganese and cobalt complex oxide (NMC) (Ni:Mn:Co = 1:1:1 (element ratio), density: 4.70 g/cm$^3$, capacity density: 175 mAh/g), as the positive electrode active material, 1.6 weight% of graphite powder (KS6) (density: 2.26 g/cm$^3$, number-mean particle size: 6.5 $\mu$m) and 3.8 weight% of acetylene black powder (AB) (density: 1.95 g/cm$^3$, number-mean particle size: 48 nm), as conductive aids, and 4.2 weight% of polyvinylidene fluoride (PVDF) (density: 1.75 g/cm$^3$) as a binder, the mixture was dispersed in N-methylpyrrolidone (NMP) to prepare a slurry. The slurry was coated using a die coater onto one side of a 20 $\mu$m-thick aluminum foil sheet as the positive electrode collector, and dried at 130°C for 3 minutes, after which it was rolled using a roll press. After rolling it was slit to a 57.0 mm width to obtain a positive electrode. The coating amount of the positive electrode active material was 109 g/m$^2$.

b. Fabrication of negative electrode

In purified water there were dispersed 87.6 weight% of graphite powder A (density: 2.23 g/cm$^3$, number-mean particle size: 12.7 $\mu$m) and 9.7 weight% of graphite powder B (density: 2.27 g/cm$^3$, number-mean particle size: 6.5 $\mu$m) as negative electrode active materials, and 1.4 (solid) weight% of carboxymethyl cellulose ammonium salt (1.83 weight% solid concentration aqueous solution) and 1.7 (solid) weight% of diene rubber latex (40 weight% solid concentration aqueous solution) as binders, to prepare a slurry. The slurry was coated using a die coater onto one side of a 12 $\mu$m-thick copper foil sheet as the negative electrode collector, and dried at 120°C for 3 minutes, after which it was rolled using a roll press. After rolling it was slit to a 58.5 mm width to obtain a negative electrode. The coating amount of the negative electrode active material was 5.2 g/m$^2$.

c. Preparation of non-aqueous electrolyte solution

LiPF$_6$ was dissolved to 1 mol/L in a mixed solvent comprising ethylene carbonate (EC) and ethylmethyl carbonate (EMC) in a volume ratio of 1:2 (Lithium Battery Grade, product of Kishida Chemical Co., Ltd.), to obtain an electrolyte solution as a non-aqueous electrolyte.

d. Battery assembly

A roll, obtained by stacking the fabricated positive electrode and negative electrode on both sides of a separator of the examples and winding the stack in a tubular fashion, was inserted into a stainless steel cylindrical battery case (exterior body). Next, 5 mL of the aforementioned electrolyte solution was injected into the roll, which was then immersed in the electrolyte solution, and the battery case was sealed shut to fabricate a non-aqueous electrolyte secondary battery.

e. Heat treatment

The non-aqueous electrolyte secondary battery obtained in d. was stored for 48 hours in an environment at 60°C.

f. Initial charge-discharge

The non-aqueous electrolyte secondary battery obtained in e. was charged at a constant current of 0.3C in an environment of 25°C until reaching 4.2 V, after which it was charged at a constant voltage of 4.2 V, and discharged to 3.0 V at a constant current of 0.3C. The total time for charging at constant current and charging at constant voltage was 8 hours. The value of 1C is the current discharged by the battery in 1 hour.

The battery was then charged at a constant current of 1C, and upon reaching 4.2 V, it was charged at a constant voltage of 4.2 V and discharged to 3.0 V at a constant current of 1C. The total time for charging at constant current and charging at constant voltage was 3 hours. The capacity during discharge at a constant current of 1C was recorded as the 1C service capacity (mAh).

The non-aqueous electrolyte secondary battery obtained in f. was charged at a constant current of 1C in an environment of 25°C until reaching 4.2 V, after which it was charged at a constant voltage of 4.2 V for 3 hours. Next, in an environment of 25°C, the battery was placed sideways on a flat surface, and a stainless steel round bar with a diameter of 15.8 mm was placed at the center of the battery, crossing the battery. A 9.1 kg deadweight was dropped from a height of 61 $\pm$2.5 cm so that an impact perpendicular to the long axial direction of the battery was produced from the round bar set at the center of the battery. Next, the exterior temperature of the battery was measured, and the presence of any effusion of gas from the battery or ignition of the battery was observed. The exterior temperature of a battery is the temperature measured with a thermocouple (K-seal type) at a position 1 cm from the bottom side of the exterior body of the battery. The impact test was evaluated according to the following criteria.

(Evaluation criteria)

A: Battery exterior temperature of <60°C
B: Battery exterior temperature of ≥60°C and <80°C
C: Battery exterior temperature of ≥80°C, no gas effusion or ignition
D: Gas effusion or ignition

<Production of acrylic resin>

<Acrylic resin 1>

(Production of core)

Into a reactor equipped with a stirrer, reflux condenser, drip tank and thermometer there were loaded 70.4 parts by weight of ion-exchanged water, 0.5 part by weight of "AQUALON KH1025" (registered trademark of Daiichi Kogyo Seiyaku Co., Ltd., 25 weight% aqueous solution) and 0.5 part by weight of "ADEKA REASOAP SR1025" (registered trademark of Adeka Corp., 25 weight% aqueous solution), as listed in the column 1A, row "Mixture" in Table 1. The internal temperature of the reactor was raised to 80°C, and 7.5 parts by weight of ammonium persulfate (APS (aq)) (2 weight% aqueous solution) was added while keeping the temperature at 80°C, to obtain a mixture.

Separately from the mixture in the reactor, a crosslinking agent and a monomer other than a silicon compound, and other starting materials used, as listed in column 1A, row "Emulsified liquid" in Table 1, were mixed for 5 minutes with a homomixer to prepare emulsified liquid 1A.

Five minutes after addition of the ammonium persulfate aqueous solution to the reactor, dropwise addition of the emulsified liquid for 1A into the reactor from a drip tank was initiated, dropping the entire amount over a period of 150 minutes. Upon completion of the dropwise addition of emulsified liquid 1A, the internal temperature of the reactor was kept at 80°C for a period of 90 minutes, after which it was cooled to room temperature to obtain an emulsion. The monomers and other starting materials used which are listed in column 1A, row "Emulsified liquid" in Table 1 were added to the reactor, together with 7.5 parts by weight of ammonium persulfate (APS (aq)) (2 weight% aqueous solution) as an initiator and 52 parts by weight of ion-exchanged water, and the mixture was stirred at 35°C for 12 hours and then cooled to room temperature to obtain an emulsion. An aqueous ammonium hydroxide solution (25 weight% aqueous solution) was added to the obtained emulsion to adjust it to pH 9.0, thereby obtaining an emulsion containing 40 weight% of core polymer particles 1A.

(Production of shell)

Using the emulsion containing the core polymer particles 1A as a seed polymer, two-stage polymerization was conducted in the manner described below in the presence of the seed polymer to synthesize shell portions, thereby producing thermoplastic polymer particles having a core/shell structure.

Into a reactor equipped with a stirrer, reflux condenser, drip tank and thermometer there were loaded the seed polymer emulsion and the ion-exchanged water and emulsifier listed in column 1B, row "Mixture" in Table 1, and while keeping the temperature in the reactor at 30°C, a 2 weight% aqueous solution of the initiator listed in column 1B, row "Mixture" of Table 1 was further added to obtain a mixture.

Separately from the mixture in the reactor, the monomer and other starting materials used, listed in column 1B, row "Emulsified liquid" in Table 1, were mixed for 5 minutes with a homomixer to prepare emulsified liquid 1B.

The emulsified liquid 1B began to be added dropwise into the reactor from a drip tank, dropping the entire amount over a period of 150 minutes. Stirring was continued for another 30 minutes in this state to absorb the monomer in the seed polymer.

Next, while keeping the pH of the reaction system below 4, the internal temperature of the reactor was raised to 80°C, and stirring was continued for 120 minutes, after which the mixture was cooled to room temperature. After cooling, it was filtered with a 200 mesh wire net to remove the aggregates, thereby obtaining an emulsion containing an acrylic resin (Tg: 60°C, mean particle diameter: 500 nm).

After filtering the obtained emulsion, 25 weight% ammonia water and water were added, and the aforementioned acrylic resin that had been adjusted to pH 8 and a solid content of 40 weight%, and acrylic resin 3 described below, were mixed in so that the polymer content was 10 weight% with respect to the total weight, thus obtaining a liquid mixture. The liquid mixture was uniformly dispersed in water to a polymer concentration of 10 weight% to prepare acrylic resin 1.

<Acrylic resin 2>

Into a reactor fitted with a stirrer, reflux condenser, drip tank and thermometer there were loaded 70.4 parts by weight of ion-exchanged water, 0.5 part by weight of "AQUALON KH1025" and 0.5 part by weight of "ADEKA REASOAP SR1025", as emulsifiers, as listed in column "Acrylic resin 2", row "Mixture" in Table 1. The internal temperature of the reactor was then raised to 80°C, and 7.5 parts by weight of a 2% aqueous solution of ammonium persulfate (APS (aq)) was added while keeping the temperature at 80°C, to obtain a mixture.

Separately from the mixture in the reactor, a mixture of the monomers and the other starting materials used, 3 parts by weight of "AQUALON KH1025", 3 parts by weight of "ADEKA REASOAP SR1025" and 0.05 part by weight of "NaSS" as emulsifiers, 7.5 parts by weight of APS (aq), and 52 parts by weight of ion-exchanged water, as listed in column "Acrylic resin 2", row "Emulsified liquid" in Table 1, was mixed for 5 minutes with a homomixer to prepare an emulsified liquid.

Five minutes after addition of the ammonium persulfate aqueous solution, the emulsified liquid was added dropwise from the drip tank into the reactor over a period of 150 minutes.

Next, while keeping the pH of the reaction system below 4, the internal temperature of the reactor was raised to 80°C and stirring was continued for 120 minutes, after which the mixture was cooled to room temperature. After cooling, it was filtered with a 200 mesh wire net to remove the aggregates, thereby obtaining an emulsion containing an acrylic resin (Tg: -20°C, mean particle diameter: 160 nm).

After filtering the obtained emulsion, 25 weight% ammonia water and water were added, and the aforementioned acrylic resin that had been adjusted to pH 8 and a solid content of 40 weight%, and acrylic resin 3 described below, were mixed in so that the polymer content was 10 weight% with respect to the total weight, thus obtaining a liquid mixture. The liquid mixture was uniformly dispersed in water to a polymer concentration of 10 weight% to prepare acrylic resin 2.

<Acrylic resin 3>

Acrylic resin 3 (Tg: -30°C, mean particle diameter: 160 nm) was produced under the same conditions as for production of acrylic resin 2 before it was mixed with acrylic resin 3, except that the starting materials used for acrylic resin 2 were changed to the starting materials for acrylic resin 3, as shown in Table 1.

<Example 1>

(1) Preparation of first polyolefin solution

With 100 parts by weight of a first polyolefin resin comprising 20 weight% of polypropylene with a weight-average molecular weight (Mw) of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C), there was mixed 0.2 part by weight of tetrakis[methylene-3-(3,5-ditertiary butyl-4-hydroxyphenyl)-propionate]methane as an antioxidant, to prepare a mixture.

After loading 25 parts by weight of the obtained mixture into a strong kneading type twin-screw extruder (inner diameter = 58 mm, L/D = 42), 75 parts by weight of liquid paraffin ((3500 cm$^2$/s (35cst (40C)) was fed from the side feeder of the twin-screw extruder and melt kneading was carried out at 210°C, 250 rpm, to prepare a first polyolefin solution.

(2) Preparation of second polyolefin solution

With 100 parts by weight of a second polyolefin resin comprising 40 weight% of ultrahigh molecular weight polyethylene with a Mw of $2.0 \times 10^6$ (UHMwPE) and 60 weight% of high-density polyethylene with a Mw of $5.6 \times 10^5$ (HDPE: density = 0.955 g/cm$^3$), there was mixed 0.2 part by weight of tetrakis[methylene-3-(3,5-ditertiary butyl-4-hydroxyphenyl)-propionate]methane as an antioxidant, to prepare a mixture.

After loading 25 parts by weight of the obtained mixture into another twin-screw extruder of the same type as before, 75 parts by weight of liquid paraffin (3500 cm$^2$/s(35cSt (40°C)) was fed from the side feeder of the twin-screw extruder and melt kneading was carried under the same conditions as before to prepare a second polyolefin solution.

(3) Extrusion

The first and second polyolefin solutions were fed from their respective twin-screw extruders to a three-layer T-die, and were extruded to form: first polyolefin solution/second polyolefin solution/first polyolefin solution, in a layer thickness ratio of 10/80/10. The extrusion molded body was cooled with a cooling roll adjusted to 30°C, while being taken up at a take-up speed of 2 m/min, to form a gel-like three-layer sheet.

(4) First stretching, film-forming solvent removal, and drying

The gel-like three-layer sheet was subjected to simultaneous biaxial stretching with a tenter stretcher at 116°C, to a factor of 5 in the MD direction and the TD direction (first stretching). The stretched gel-like three-layer sheet was fixed to a 20 cm × 20 cm aluminum frame plate and immersed in a methylene chloride bath that had been adjusted to 25°C, the liquid paraffin was removed while shaking for 3 minutes at 100 rpm, and air drying was carried out at room temperature.

(5) Second stretching and heat setting

The dried film was stretched to a factor of 1.4 in the TD direction at 126°C, using a batch stretching machine (second stretching). The film was then subjected to heat setting treatment at 126°C by a tenter method.

(6) Formation of active layer

A coating solution was prepared by dispersing 80.0 parts by weight of aluminum oxide ($Al_2O_3$, mean particle diameter: 0.6 $\mu$m) as inorganic particles, 20.0 parts by weight of acrylic resin 1 as an acrylic-based resin, and 1.0 part by weight of an aqueous solution of ammonium polycarboxylate (SN Dispersant 5468, product of San Nopco, Ltd.) as a dispersing agent, in 100 parts by weight of water.

The three-layer microporous film produced in (5) above was immersed in the produced coating solution for dip coating, wire bars each with wire sizes of 0.5 mm were used to adjust the thicknesses of the slurry coating layers on both sides, and the solvent was dried off. The thicknesses of the active layers formed on both sides of the porous film were 4.0 $\mu$m.

Tables 2 and 4 show the mixing proportions of the components in the polyolefin three-layer microporous film having the active layers formed as described above, as well as the production conditions and evaluation results.

<Example 2>

A mixture comprising: 100 parts by weight of a second polyolefin resin, which comprises 17.5 weight% of ultrahigh molecular weight polyethylene with a Mw of $2.0 \times 10^6$ (UHMwPE), 57.5 weight% of high-density polyethylene with a Mw of $3.0 \times 10^5$ (HDPE: density = 0.955 g/cm$^3$), and 25 wt% of linear low-density polyethylene (ethylene-1-hexene copolymer) with an MFR of 135 g/10 min and a melting point of 124°C; and 0.2 part by weight of tetrakis[methylene-3-(3,5-ditertiary butyl-4-hydroxyphenyl)-propionate]methane as an antioxidan was used instead of the mixture of Example 1, in "(2) Preparation of second polyolefin solution" of Example 1.

The rest of the procedure was carried out in the same manner as Example 1, to produce an active layer-formed polyolefin three-layer microporous film. The mixing proportions of each of the components, and the production conditions and evaluation results, are shown in Tables 2, 3 and 4.

<Example 3>

A mixture comprising: 100 parts by weight of a second polyolefin resin, which comprises 16 weight% of ultrahigh molecular weight polyethylene with a Mw of $2.0 \times 10^6$ (UHMwPE), 66 weight% of high-density polyethylene with a Mw of $3.0 \times 10^5$ (HDPE: density = 0.955 g/cm$^3$), and 18 wt% of polypropylene with a heat of fusion of 96 J/g; and 0.2 part by weight of tetrakis[methylene-3-(3,5-ditertiary butyl-4-hydroxyphenyl)-propionate]methane as an antioxidant was used instead of the mixture of Example 1 in "(2) Preparation of second polyolefin solution" of Example 1.

The rest of the procedure was carried out in the same manner as Example 1 to produce an active layer-formed polyolefin three-layer microporous film, and the mixing proportions of each of the components of the active layer-formed polyolefin three-layer microporous film, and the production conditions and evaluation results, are shown in Tables 2 and 4.

<Example 4> (not according to the invention)

The coating solution used was obtained by uniformly dispersing 95.0 parts by weight of aluminum oxide (mean particle diameter: 0.6 $\mu$m), 5.0 parts by weight of acrylic resin 1 and 1.0 part by weight of an aqueous ammonium polycarboxylate solution (SN dispersant 5468, product of San Nopco, Ltd.) as a dispersing agent, in 100 parts by weight of water, as the coating solution for "(6) Formation of active layer" in Example 2.

The rest of the procedure was carried out in the same manner as Example 2, to produce an active layer-formed polyolefin three-layer microporous film. The mixing proportions of each of the components, and the production conditions and evaluation results, are shown in Table 2.

<Example 5>

The coating solution used was obtained by uniformly dispersing 50.0 parts by weight of aluminum oxide (mean particle diameter: 0.6 $\mu$m), 50.0 parts by weight of acrylic resin 1 and 1.0 part by weight of an aqueous ammonium polycarboxylate solution (SN dispersant 5468, product of San Nopco, Ltd.) as a dispersing agent, in 100 parts by weight of water, as the coating solution for "(6) Formation of active layer" in Example 2.

The rest of the procedure was carried out in the same manner as Example 2, to produce an active layer-formed polyolefin three-layer microporous film. The mixing proportions of each of the components, and the production conditions and evaluation results, are shown in Table 2.

<Example 6>

For "(6) Formation of active layer" in Example 2, acrylic resin 2 was used instead of acrylic resin 1 as the acrylic-based resin.

The rest of the procedure was carried out in the same manner as Example 2, to produce an active layer-formed polyolefin three-layer microporous film. The mixing proportions of each of the components, and the production conditions and evaluation results, are shown in Table 2.

<Example 7>

Using a gravure coater, one side of the active layer-formed polyolefin three-layer microporous film produced in Example 6 was entirely coated with acrylic resin 2 to a coated area percentage of 60% and a coating basis weight of 0.5 g/m². It was then heated and dried at 50°C for 1 minute to obtain a separator with a thermoplastic polymer particle layer formed on it. The evaluation results are shown in Table 2.

<Example 8>

For "(6) Formation of active layer" in Example 2, a two-pack curable aqueous acrylurethane resin (WE-301 by DIC, solid concentration: 45 weight%) comprising an aqueous acryl polyol and a water-dispersible polyisocyanate (curing agent), alumina particles with a mean particle diameter of 0.6 $\mu$m, and ion-exchanged water, were combined in a weight ratio of 10:40:50 (20/80 as the weight ratio of the aqueous acrylurethane resin and alumina), and the components were dispersed for 6 hours. Filtration was then performed with a filter having a filtration limit of 5 $\mu$m, to obtain a coating solution.

The rest of the procedure was carried out in the same manner as Example 2, to produce an active layer-formed polyolefin three-layer microporous film. The mixing proportions of each of the components, and the production conditions and evaluation results, are shown in Table 2.

<Example 9>

For "(6) Formation of active layer" in Example 2, a copolymer of polyvinyl alcohol and acrylic acid/methyl methacrylate ("POVACOAT$^R$" by Nissin Kasei Co., Ltd.), alumina particles with a mean particle diameter of 0.6 $\mu$m and a solvent (ion-exchanged water:ethanol = 70:30) were combined in a weight ratio of 5:45:50 (weight ratio of copolymer and alumina particles = 10/90), and the mixture was dispersed for 6 hours. Filtration was then performed with a filter having a filtration limit of 5 $\mu$m, to obtain a coating solution.

The rest of the procedure was carried out in the same manner as Example 2, to produce an active layer-formed polyolefin three-layer microporous film. The mixing proportions of each of the components, and the production conditions and evaluation results, are shown in Table 2.

<Example 10>

For "(6) Formation of active layer" in Example 2, AlO(OH) powder (aluminum hydroxide oxide, mean particle diameter: 1.0 $\mu$m) was used instead of $Al_2O_3$ powder as the inorganic material particles.

The rest of the procedure was carried out in the same manner as Example 2, to produce an active layer-formed polyolefin three-layer microporous film. The mixing proportions of each of the components, and the production conditions and evaluation results, are shown in Table 2.

<Example 11>

For "(6) Formation of active layer" in Example 2, $BaTiO_3$ powder (barium titanate, mean particle diameter: 0.6 $\mu$m) was used instead of $Al_2O_3$ powder as the inorganic material particles.

The rest of the procedure was carried out in the same manner as Example 2, to produce an active layer-formed polyolefin three-layer microporous film. The mixing proportions of each of the components, and the production conditions and evaluation results, are shown in Table 2.

<Example 12>

For "(1) Preparation of first polyolefin solution" in Example 2, the mixture used comprised 100 parts by weight of a first polyolefin resin comprising 16 weight% of polypropylene with a Mw of $1.2 \times 10^6$ (PP: melting point = 162°C) and 64 weight% of high-density polyethylene with a Mw of $0.74 \times 10^6$ (HDPE: density = 0.955 g/cm$^3$, melting point = 135°C), with 20 weight% of silica powder (mean particle diameter: 15 nm) and 0.2 part by weight of tetrakis[methylene-3-(3,5-ditertiary butyl-4-hydroxyphenyl)-propionate]methane as an antioxidant. The rest of the procedure was carried out in the same manner as Example 2, to produce an active layer-formed polyolefin three-layer microporous film. The mixing proportions of each of the components, and the production conditions and evaluation results, are shown in Table 2.

<Comparative Example 1>

The rest of the production was according to Example 1, except that "(6) Formation of active layer" in Example 1 was not carried out, and the mixing proportions of each of the components of the active layer-formed polyolefin three-layer microporous film, and the production conditions and evaluation results, are shown in Table 2.

<Comparative Example 2>

For "(1) Preparation of first polyolefin solution" in Example 1, 100 parts by weight of a first polyolefin resin, which comprises high-density polyethylene with a Mw of $0.74 \times 10^6$ (HDPE: density = 0.955 g/cm$^3$, melting point = 135°C), was used, instead of 100 parts by weight of the first polyolefin resin comprising 20 weight% of polypropylene with a Mw of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C) .
The rest of the procedure was carried out in the same manner as Example 1, to produce an active layer-formed polyolefin three-layer microporous film. The mixing proportions of each of the components, and the production conditions and evaluation results, are shown in Table 2.

<Comparative Example 3>

For "(1) Preparation of first polyolefin solution" in Example 1, 100 parts by weight of a first polyolefin resin, which comprises polypropylene with a Mw of $1.2 \times 10^6$ (PP: melting point = 162°C), was used, instead of 100 parts by weight of the first polyolefin resin comprising 20 weight% of polypropylene with a Mw of $1.2 \times 10^6$ (PP: melting point = 162°C) and 80 weight% of high-density polyethylene with a Mw of $0.74 \times 10^6$ (HDPE: density = 0.955 g/cm$^3$, melting point = 135°C) .
The rest of the procedure was carried out in the same manner as Example 1, to produce an active layer-formed polyolefin three-layer microporous film. The mixing proportions of each of the components, and the production conditions and evaluation results, are shown in Table 2.

<Example 13>

For "(1) Preparation of first polyolefin solution" in Example 2, the mixture was prepared by mixing 0.2 part by weight of tetrakis[methylene-3-(3,5-ditertiary butyl-4-hydroxyphenyl)-propionate]methane as an antioxidant with 100 parts by weight of a first polyolefin resin comprising 20 weight% of polypropylene with a Mw of $2.0 \times 10^6$ (PP: melting point = 162°C) and 80 weight% of high-density polyethylene with a Mw of $0.56 \times 10^6$ (HDPE: density = 0.955 g/cm$^3$, melting point = 135°C).
The rest of the procedure was carried out in the same manner as Example 2, to produce an active layer-formed polyolefin three-layer microporous film. The mixing proportions of each of the components, and the production conditions and evaluation results, are shown in Table 3.

<Example 14>

For "(1) Preparation of first polyolefin solution" in Example 2, the mixture was prepared by mixing 0.2 part by weight of tetrakis[methylene-3-(3,5-ditertiary butyl-4-hydroxyphenyl)-propionate]methane as an antioxidant with 100 parts by weight of a first polyolefin resin comprising 20 weight% of polypropylene with a Mw of $0.6 \times 10^6$ (PP: melting point = 162°C) and 80 weight% of high-density polyethylene with a Mw of $0.86 \times 10^6$ (HDPE: density = 0.955 g/cm$^3$, melting point = 135°C).
The rest of the procedure was carried out in the same manner as Example 2, to produce an active layer-formed polyolefin three-layer microporous film. The mixing proportions of each of the components, and the production conditions and evaluation results, are shown in Table 3.

<Example 15>

For "(1) Preparation of first polyolefin solution" in Example 1, the mixture was prepared by mixing 0.2 part by weight of tetrakis[methylene-3-(3,5-ditertiary butyl-4-hydroxyphenyl)-propionate]methane as an antioxidant with 100 parts by weight of a first polyolefin resin comprising 20 weight% of polypropylene with a Mw of $1.2 \times 10^6$ (PP: melting point = 162°C), 55 weight% of high-density polyethylene with a Mw of $0.74 \times 10^6$ (HDPE: density = 0.955 g/cm$^3$, melting point = 135°C) and 25 wt% of linear low-density polyethylene (ethylene-1-hexene copolymer) with an MFR of 135 g/10 min and a melting point of 124°C.
The rest of the procedure was carried out in the same manner as Example 1, to produce an active layer-formed polyolefin three-layer microporous film. The mixing proportions of each of the components, and the production conditions and evaluation results, are shown in Table 4.

<Example 16>

For "(1) Preparation of first polyolefin solution" in Example 1, the mixture used comprised 0.2 part by weight of the antioxidant tetrakis[methylene-3-(3,5-ditertiary butyl-4-hydroxyphenyl)-propionate]methane combined with 100 parts by weight of a first polyolefin resin comprising 82 weight% of high-density polyethylene with a Mw of $0.74 \times 10^6$ (HDPE: density = 0.955 g/cm$^3$, melting point = 135°C) and 18 weight% of polypropylene with a heat of fusion of 96 J/g.
The rest of the procedure was carried out in the same manner as Example 1, to produce an active layer-formed polyolefin three-layer microporous film. The mixing proportions of each of the components, and the production conditions and evaluation results, are shown in Table 4.

<Example 17>

For "(1) Preparation of first polyolefin solution" in Example 1, 100 parts by weight of a first polyolefin resin, which comprises 35 weight% of polypropylene with a weight-average molecular weight (Mw) of $1.2 \times 10^6$ (PP: melting point = 162°C) and 65 weight% of high-density polyethylene with a Mw of $0.74 \times 10^6$ (HDPE: density = 0.955 g/cm$^3$, melting point = 135°C), was used. The rest of the procedure was carried out in the same manner as Example 1, to produce an active layer-formed polyolefin three-layer microporous film. The mixing proportions of each of the components, and the production conditions and evaluation results, are shown in Table 2.

<Example 18> (not according to the invention)

The rest of the procedure was carried out in the same manner as Example 1, except that the active layer contained no inorganic particles, to produce an active layer-formed polyolefin three-layer microporous film.
The mixing proportions of each of the components, and the production conditions and evaluation results, are shown in Table 2.

[Table 1]

| Component type | | Starting material name | Active ingredient | Acrylic resin 1 | | Acrylic resin 2 | Acrylic resin 3 |
| --- | --- | --- | --- | --- | --- | --- | --- |
| | | | | 1A | 1B | | |
| | | | (wt%) | (wt%) | (wt%) | (wt%) | (wt%) |
| Mixture | Emulsifier | KH1025 | 25 | 0.5 | 0.5 | 0.5 | 0.5 |
| | | SR1025 | 25 | 0.5 | 0.5 | 0.5 | 0.5 |
| | Ion-exchanged water | | - | 70.4 | 70.4 | 70.4 | 70.4 |
| | Initiator | APS (aq) | 2 | 7.5 | 7.5 | 7.5 | 7.5 |

(continued)

| Component type | | Starting material name | Active ingredient | Acrylic resin 1 | | Acrylic resin 2 | Acrylic resin 3 |
|---|---|---|---|---|---|---|---|
| | | | | 1A | 1B | | |
| | | | (wt%) | (wt%) | (wt%) | (wt%) | (wt%) |
| Emulsified liquid | (Meth)acrylic acid ester | MMA | 100 | 85 | 77.9 | 1 | 5.1 |
| | | BA | 100 | - | 11.6 | 1 | 1 |
| | | CHMA | 100 | - | - | 30 | 25 |
| | | EHA | 100 | - | - | 50 | 59.5 |
| | | BMA | 100 | - | - | 0.4 | 1 |
| | Acid monomer | MAA | 100 | 5 | - | 1 | 0.1 |
| | | AA | 100 | - | - | 1 | 0.1 |
| | Functional group-containing monomer | HEMA | 100 | - | - | 5 | 2 |
| | | AM | 100 | - | - | 0.1 | 5 |
| | | GMA | 100 | - | - | - | - |
| | Polyalkyleneglycol group-containing monomer | M-40G | 100 | - | - | 10 | - |
| | Crosslinking agent | A-TMPT | 100 | 5 | 5 | 0.5 | 0.7 |
| | | EDMA | 100 | 5 | 5 | - | - |
| | Silicon compound | γ-Methacryloxypropyl-trimethoxysilane | 100 | - | 0.5 | - | 0.5 |
| | Emulsifier | KH1025 | 25 | 3 | 0.2 | 3 | 3 |
| | | SR1025 | 25 | 3 | 3 | 3 | 3 |
| | | NaSS | 100 | 0.05 | 3 | 0.05 | 0.05 |
| | Initiator | APS (aq) | 2 | 7.5 | 0.05 | 7.5 | 7.5 |
| | Ion-exchanged water | | - | 52 | 7.5 | 52 | 52 |

In Table 1, the abbreviations have the following meanings.

(1) Emulsifiers

KH1025: AQUALON KH1025, product of Dai-ichi Kogyo Seiyaku Co., Ltd.
SR1025: ADEKA REASOAP SR1025, product of Adeka Corp. NaSS: Sodium p-styrenesulfonate, product of Tosoh Corp.

(2) Initiators

APS (aq): Ammonium persulfate aqueous solution

(3) (Meth)acrylic acid esters

MMA: Methyl methacrylate

BA: Butyl acrylate
CHMA: Cyclohexyl methacrylate
EHA: Ethylhexyl acrylate
BMA: Butyl methacrylate

(4) Acid monomers

MAA: Methacrylic acid
AA: Acrylic acid

(5) Functional group-containing monomers

HEMA: Hydroxyethyl methacrylate
AM: Acrylamide
GMA: Glycidyl methacrylate

(6) Polyalkyleneglycol group-containing monomers M-40G: Acrylate monomer, product of Shin-Nakamura Chemical Co., Ltd.

(7) Crosslinking agents

A-TMPT: Trimethylolpropane triacrylate, product of Shin-Nakamura Chemical Co., Ltd.
EDMA: Ethylene dimethacrylate

[Table 2]

| | | | Example 1 | Example 2 | Example 3 | Example 4 | Example 5 | Example 6 | Example 7 | Example 8 | Example 9 | Example 10 | Example 11 | Example 12 | Example 17 | Example 18 | Comp. Example 1 | Comp. Example 2 | Comp. Example 3 |
|---|---|---|---|---|---|---|---|---|---|---|---|---|---|---|---|---|---|---|---|
| First layer | HDPE | wt% | 80 | 80 | 80 | 80 | 80 | 80 | 80 | 80 | 80 | 80 | 80 | 64 | 65 | 80 | 80 | 100 | None |
| | PP | wt% | 20 | 20 | 20 | 20 | 20 | 20 | 20 | 20 | 20 | 20 | 20 | 16 | 35 | 20 | 20 | None | 100 |
| | Other | Other component / wt% | | | | | | | | | | | | Silica /20 | | | | | |
| Second layer | UHMwPE | wt% | 40 | 17.5 | 16 | 17.5 | 17.5 | 17.5 | 17.5 | 17.5 | 17.5 | 17.5 | 17.5 | 17.5 | 40 | 40 | 40 | 40 | 40 |
| | HDPE | wt% | 60 | 57.5 | 66 | 57.5 | 57.5 | 57.5 | 57.5 | 57.5 | 57.5 | 57.5 | 57.5 | 57.5 | 60 | 60 | 60 | 60 | 60 |
| | Other | Other component/ wt% | | A/25 | B/18 | A/25 | A/25 | A/25 | A/25 | A/25 | A/25 | A/25 | A/25 | A/25 | | | | | |
| Active layer | Acrylic-based resin | | Acrylic resin 1 | Acrylic resin 1 | Acrylic resin 1 | Acrylic resin 1 | Acrylic resin 1 | Acrylic resin 2 | see Example 7 | Aqueous acry-lurethane resin | POVA-COAT | Acrylic resin 1 | Acrylic resin 1 | Acrylic resin 1 | Acrylic resin 1 | Acrylic resin 1 | None | Acrylic resin 1 | Acrylic resin 1 |
| | Inorganic particles | | $Al_2O_3$ | $Al_2O_3$ | $Al_2O_3$ | $Al_2O_3$ | $Al_2O_3$ | $Al_2O_3$ | see Example 7 | $Al_2O_3$ | $Al_2O_3$ | AlO (OH) | $BaTiO_3$ | $Al_2O_3$ | $Al_2O_3$ | - | None | $Al_2O_3$ | $Al_2O_3$ |
| | Weight ratio of acrylic-based resin and inorganic particles (acrylic-based resin/inorganic particles) | | 20/80 | 20/80 | 20/80 | 5/95 | 50/50 | 20/80 | see Example 7 | 20/80 | 10/90 | 20/80 | 20/80 | 20/80 | 20/80 | - | None | 20/80 | 20/80 |

EP 3 340 343 B1

27

| Evaluation results | | Example 1 | Example 2 | Example 3 | Example 4 | Example 5 | Example 6 | Example 7 | Example 8 | Example 9 | Example 10 | Example 11 | Example 12 | Example 17 | Example 18 | Comp. Example 1 | Comp. Example 2 | Comp. Example 3 |
|---|---|---|---|---|---|---|---|---|---|---|---|---|---|---|---|---|---|---|
| Evaluation results | Variation in peel strength between active layer and substrate | A | A | A | B | A | A | A | B | A | A | A | A | A | A | - | C | A |
| | Separator handling properties | A | A | A | A | B | A | A | A | B | A | A | A | A | B | A | A | A |
| | Thermal shock properties | A | A | A | B | A | A | A | A | B | A | A | A | B | B | C | A | B |
| | Low-temperature cycle characteristic | B | B | B | B | B | A | B | B | B | B | B | A | B | B | B | B | C |

Examples 4 and 18 are not according to the invention

[Table 3]

| | | | [Example | 2 Example | 13 Example 14 |
|---|---|---|---|---|---|
| First layer | HDPE | Mw (*$10^6$) | 0.74 | 0.56 | 0.86 |
| | | wt% | 80 | 80 | 80 |
| | PP | Mw (*$10^6$) | 1.2 | 2 | 0.6 |
| | | wt% | 20 | 20 | 20 |
| | Mw Ratio of PE and PP (PE/PP) | | 0.62 | 0.28 | 1.43 |
| | Other | Other component /wt% | | | |
| Second layer | UHMwPE | wt% | 17.5 | 17.5 | 17.5 |
| | HDPE | wt% | 57.5 | 57.5 | 57.5 |
| | Other | Other component /wt% | A/25 | A/25 | A/25 |
| Active layer | Acrylic-based resin | | Acrylic resin 1 | Acrylic resin 1 | Acrylic resin 1 |
| | Inorganic particles | | $Al_2O_3$ | $Al_2O_3$ | $Al_2O_3$ |
| | Weight ratio of water-soluble, water-dispersible resin/ inorganic particles | | 20/80 | 20/80 | 20/80 |
| Evaluation results | Variation in peel strength between active layer and substrate | | A | B | A |

[Table 4]

| | | | Example | 1 Example | 2 Example | 3 Example | 15 Example 16 |
|---|---|---|---|---|---|---|---|
| First layer | HDPE | wt% | 80 | 80 | 80 | 55 | 82 |
| | PP | wt% | 20 | 20 | 20 | 20 | |
| | Other | Other component/wt% | | | | A/25 | B/18 |
| Second layer | UHMwPE | wt% | 40 | 17.5 | 16 | 40 | 40 |
| | HDPE | wt% | 60 | 57.5 | 66 | 60 | 60 |
| | Other | Other component/wt% | | A/25 | B/18 | | |
| Active layer | Acrylic-based resin | | Acrylic resin 1 | Acrylic resin 1 | Acrylic resin 1 | Acrylic resin 1 | Acrylic resin 1 |
| | Inorganic particles | | $Al_2O_3$ | $Al_2O_3$ | $Al_2O_3$ | $Al_2O_3$ | $Al_2O_3$ |
| | Weight ratio of water-soluble, water-dispersible resin/ inorganic particles | | 20/80 | 20/80 | 20/80 | 20/80 | 20/80 |
| Evaluation results | Impact resistance | | C | A | A | B | B |

<Comments regarding evaluation results>

(1) Regarding peel strength between active layer and substrate

When Example 1 and Comparative Example 2 were compared, it was seen that the peel strength tended to be more excellent when both PP and PE were present in the first microporous layer, than when the layer did not contain PP (PE alone was present). While it is not our intention to be limited to any particular theory, the reason for this is presumed to be that since PP has higher polarity (surface free energy) than PE, the intermolecular forces with the active layer are greater and therefore the peel strength between the active layer and substrate was increased.

(2) Regarding handling properties of separator

When Example 2 and Example 9 were compared, it was seen that the example in which the aqueous binder contained no PVA tended to have more excellent handling properties exhibited by the separator, compared to the example in which it contained PVA. While it is not our intention to be limited to any particular theory, the reason is presumably because PVA has water-absorbing hydroxyl groups and thus tends to adsorb moisture in the air, producing stickiness.

(3) Regarding thermal shock properties

When Example 4 and Example 2 were compared, it was seen that having fewer inorganic particles in the active layer results in a more excellent thermal shock property. While it is not our intention to be limited to any particular theory, the reason is presumably because the presence of fewer inorganic particles results in higher adhesion between the electrode and the separator, making interlayer separation less likely to occur in thermal cycling.

When Example 2 and Example 9 were compared, it was seen that the example in which the aqueous binder contained no PVA tended to have a more excellent thermal shock property, compared to the example in which it contained PVA. While it is not our intention to be limited to any particular theory, the reason is presumably because PVA exhibits greater expansion and contraction during heating and cooling than acrylic resins, and therefore a lower amount of PVA tends to result in less detachment between the active layer and the other layers.

When Example 1 and Comparative Example 1 were compared, it was seen that having an active layer on the substrate results in more satisfactory thermal shock properties than when no active layer is present. While it is not our intention to be limited to any particular theory, the reason is presumably because the adhesive force between the electrode and the separator increases, reducing the likelihood of shifting at the interface during thermal cycling, such that the resistance is not impaired even with thermal cycling.

(4) Regarding low-temperature cycle characteristic

When Example 1 and Comparative Example 3 were compared, it was seen that a first microporous layer including both PE and PP exhibited a more excellent low-temperature cycle characteristic than one comprising PP alone. While it is not our intention to be limited to any particular theory, the reason is presumably because the glass transition temperature of PP is approximately 0 degrees, such that in low-temperature cycle testing PP becomes brittle when the battery temperature falls below 0 degrees, and this can therefore affect the state of the pores in the porous film and the transfer of Li ions.

When Example 2 and Example 12 were compared, it was seen that the low-temperature cycle characteristic was superior when the first microporous layer contained silica. While it is not our intention to be limited to any particular theory, the reason is presumably because adding silica increases affinity of the first microporous layer for the electrolyte, and improves the low-temperature cycle characteristic.

When Example 2 and Example 7 were compared, it was seen that the low-temperature cycle characteristic was superior when the acrylic-based resin of the active layer was a copolymer having an ethylenic unsaturated monomer with a polyalkyleneglycol group as the monomer unit. While it is not our intention to be limited to any particular theory, the reason is presumably because the latter had lower film resistance exhibited by the separator, thus improving the low-temperature cycle characteristic.

(5) Regarding variation in peel strength between active layer and substrate

When Examples 2, 13 and 14 were compared, it was seen that when the Mw ratio of PE/PP in the first microporous layer was in the range of 0.6 to 1.5, the variation in peel strength tended to be lower. While it is not our intention to be limited to any particular theory, the reason is presumably because compatibility between PE and PP is poor when the Mw ratio of PE/PP in the first microporous layer is outside of this range. In addition, PE-rich portions and PP-rich portions are present in the first microporous layer. Since PP has more excellent adhesion with active layers than PE, presumably this difference causes the variation in adhesive peel strength with the active layer to be increased.

(6) Regarding impact resistance

It was found that using component A (linear low-density polyethylene) and component B (polypropylene with a heat of fusion of 96 J/g) as other components in the first or second microporous layer tended to result in increased impact resistance. While it is not our intention to be limited to any particular theory, the reason is presumably because component A is more resistant to crystallization and has more amorphous portions than HDPE and UHMwPE, whereas component B is more resistant to crystallization and has more amorphous portions than PP that has a Mw of $1.2 \times 10^6$, and since the amorphous portions have a shock absorbing effect, this tends to increase the impact resistance.

It was found to be preferable for the second polyolefin resin to contain component A and component B rather than the first polyolefin resin, from the viewpoint of the impact resistance of the power storage device. While it is not our intention to be limited to any particular theory, the reason is presumably because satisfactory impact resistance of the power storage device is exhibited when the layer containing component A or component B is thicker than the other layers, or when the layer containing component A or component B is further from the electrode (other layers are intervening).

The separator for a power storage device of the invention can be suitably used as a separator for power storage devices such as secondary batteries, and especially lithium-ion secondary batteries.

[Explanation of Symbols]

20 Deadweight
21 Round bar
22 Sample

**Claims**

1.  A separator for a power storage device comprising:

    a polyolefin multilayer microporous film containing polyethylene and polypropylene, and
    an active layer disposed on at least one side of the polyolefin multilayer microporous film,
    wherein the polyolefin multilayer microporous film has a polypropylene concentration at the outermost sections that is higher than the polypropylene concentration at the innermost section, and a polyethylene concentration at the outermost sections that is lower than the polyethylene concentration at the innermost section, and
    wherein the active layer contains an acrylic-based resin and inorganic particles, and the weight ratio of the acrylic-based resin and the inorganic particles (acrylic-based resin/inorganic particles) in the active layer is 10/90 to 50/50,
    wherein the outermost sections comprise a first microporous layer, and the innermost section comprises a second microporous layer,
    wherein the first microporous layer comprises a first polyolefin resin comprising polyethylene and polypropylene, and the amount of polyethylene contained in the first polyolefin resin is 50 weight% to 99 weight%, based on 100 weight% of the total weight of the first polyolefin resin, and the amount of polypropylene contained in the first polyolefin resin is 1 weight% to 50 weight%, based on 100 weight% of the total weight of the first polyolefin resin, and
    wherein the second microporous layer comprises a second polyolefin resin comprising polyethylene, the amount of polyethylene contained in the second polyolefin resin is 50 weight% to 100 weight%, based on 100 weight% of the total weight of the second polyolefin resin, and the amount of polypropylene contained in the second polyolefin resin is 0 weight% to 25 weight%, based on 100 weight% of the total weight of the second polyolefin resin.

2.  The separator for a power storage device claim 1, wherein the polyolefin multilayer microporous film is laminated in the order: the first microporous layer, the second microporous layer and the first microporous layer.

3. The separator for a power storage device according to claim 2, wherein the first polyolefin resin or the second polyolefin resin further contains linear low-density polyethylene.

4. The separator for a power storage device according to claim 3, wherein the linear low-density polyethylene is ethylene-1-hexene copolymer.

5. The separator for a power storage device according to any one of claims 1 to 4, wherein the acrylic-based resin is particulate and has a core-shell structure with a core section and a shell section at least partially covering the outer surface of the core section.

6. The separator for a power storage device according to any one of claims 1 to 5, wherein the acrylic-based resin comprises a copolymer having an ethylenic unsaturated monomer with a polyalkyleneglycol group as the monomer unit.

7. The separator for a power storage device according to any one of claims 2 to 6, wherein the first microporous layer of the polyolefin multilayer microporous film further contains one or more compounds selected from among silica, alumina and titania.

8. A laminated body having:

a positive electrode,
the separator for a power storage device according to any one of claims 1 to 7, and
a negative electrode,

laminated in that order.

9. A roll in which a laminated body according to claim 8 is rolled.

10. A power storage device comprising the laminated body according to claim 8 or the roll according to claim 9, and an electrolyte solution.


**Patentansprüche**

1. Separator für eine Stromspeichervorrichtung, umfassend:

eine mehrschichtige mikroporöse Polyolefinfolie, die Polyethylen und Polypropylen enthält, und
eine aktive Schicht, die sich auf wenigstens einer Seite der mehrschichtigen mikroporösen Polyolefinfolie befindet,
wobei die mehrschichtige mikroporöse Polyolefinfolie in den äußersten Abschnitten eine Polypropylenkonzentration, die höher ist als die Polypropylenkonzentration im innersten Abschnitt, und in den äußersten Abschnitten eine Polyethylenkonzentration, die geringer ist als die Polyethylenkonzentration im innersten Abschnitt, aufweist und
wobei die aktive Schicht ein Harz auf Acrylbasis und anorganische Teilchen enthält und das Gewichtsverhältnis des Harzes auf Acrylbasis zu den anorganischen Teilchen (Harz auf Acrylbasis/anorganische Teilchen) in der aktiven Schicht 10/90 bis 50/50 beträgt,
wobei die äußersten Anschnitte eine erste mikroporöse Schicht umfassen und der innerste Abschnitt eine zweite mikroporöse Schicht umfasst,
wobei die erste mikroporöse Schicht ein erstes Polyolefinharz, das Polyethylen und Polypropylen umfasst, umfasst und die Menge des Polyethylens, das in dem ersten Polyolefinharz enthalten ist, 50 Gew.-% bis 99 Gew.-% beträgt, bezogen auf 100 Gew.-% des Gesamtgewichts des ersten Polyolefinharzes, und die Menge des Polypropylens, das in dem ersten Polyolefinharz enthalten ist, 1 Gew.-% bis 50 Gew.-% beträgt, bezogen auf 100 Gew.-% des Gesamtgewichts des ersten Polyolefinharzes, und
wobei die zweite mikroporöse Schicht ein zweites Polyolefinharz, das Polyethylen umfasst, umfasst, die Menge des Polyethylens, das in dem zweiten Polyolefinharz enthalten ist, 50 Gew.-% bis 100 Gew.-% beträgt, bezogen auf 100 Gew.-% des Gesamtgewichts des zweiten Polyolefinharzes, und die Menge des Polypropylens, das in dem zweiten Polyolefinharz enthalten ist, 0 Gew.-% bis 25 Gew.-% beträgt, bezogen auf 100 Gew.-% des Gesamtgewichts des zweiten Polyolefinharzes.

**2.** Separator für eine Stromspeichervorrichtung gemäß Anspruch 1, wobei die mehrschichtige mikroporöse Polyolefinfolie in der folgenden Reihenfolge laminiert ist: erste mikroporöse Schicht, zweite mikroporöse Schicht und erste mikroporöse Schicht.

**3.** Separator für eine Stromspeichervorrichtung gemäß Anspruch 2, wobei das erste Polyolefinharz oder das zweite Polyolefinharz weiterhin lineares Polyethylen geringer Dichte enthält.

**4.** Separator für eine Stromspeichervorrichtung gemäß Anspruch 3, wobei das lineare Polyethylen geringer Dichte ein Ethylen-l-Hexen-Copolymer ist.

**5.** Separator für eine Stromspeichervorrichtung gemäß einem der Ansprüche 1 bis 4, wobei das Harz auf Acrylbasis teilchenförmig ist und eine Kern-Hülle-Struktur mit einem Kernabschnitt und einem Hüllenabschnitt, der die äußere Oberfläche des Kernabschnitts wenigstens teilweise bedeckt, aufweist.

**6.** Separator für eine Stromspeichervorrichtung gemäß einem der Ansprüche 1 bis 5, wobei das Harz auf Acrylbasis ein Copolymer umfasst, das ein ethylenisch ungesättigtes Monomer mit einer Polyalkylenglycolgruppe als Monomereinheit aufweist.

**7.** Separator für eine Stromspeichervorrichtung gemäß einem der Ansprüche 2 bis 6, wobei die erste mikroporöse Schicht der mehrschichtigen mikroporösen Polyolefinfolie weiterhin eine oder mehr Verbindungen enthält, die aus Siliciumoxid, Aluminiumoxid und Titanoxid ausgewählt sind.

**8.** Laminierter Körper mit:

einer positiven Elektrode,
dem Separator für eine Stromspeichervorrichtung gemäß einem der Ansprüche 1 bis 7 und
einer negativen Elektrode,
die in dieser Reihenfolge laminiert sind.

**9.** Wickel, bei dem ein laminierter Körper gemäß Anspruch 8 aufgewickelt ist.

**10.** Stromspeichervorrichtung, umfassend den laminierten Körper gemäß Anspruch 8 oder den Wickel gemäß Anspruch 9 und eine Elektrolytlösung.

**Revendications**

**1.** Séparateur pour un dispositif de stockage d'énergie comprenant :

un film microporeux multicouche de polyoléfine contenant du polyéthylène et polypropylène, et
une couche active disposée sur au moins un côté du film microporeux multicouche de polyoléfine,
dans lequel le film microporeux multicouche de polyoléfine présente une concentration en polypropylène sur les sections les plus externes qui est supérieure à la concentration en polypropylène sur la section la plus interne, et une concentration en polyéthylène sur les sections les plus externes qui est inférieure à la concentration en polyéthylène sur la section la plus interne, et
dans lequel la couche active contient une résine de base acrylique et des particules inorganiques, et le rapport de masse de la résine de base acrylique et des particules inorganiques (résine de base acrylique/particules inorganiques) dans la couche active est de 10/90 à 50/50,
dans lequel les sections les plus externes comprennent une première couche microporeuse, et la section la plus interne comprend une seconde couche microporeuse,
dans lequel la première couche microporeuse comprend une première résine de polyoléfine comprenant du polyéthylène et polypropylène, et la quantité de polyéthylène contenue dans la première résine de polyoléfine est de 50 % en masse à 99 % en masse, sur la base de 100 % en masse de la masse totale de la première résine de polyoléfine, et la quantité de polypropylène contenue dans la première résine de polyoléfine est de 1 % en masse à 50 % en masse, sur la base de 100 % en masse de la masse totale de la première résine de polyoléfine, et
dans lequel la seconde couche microporeuse comprend une seconde résine de polyoléfine comprenant du polyéthylène, la quantité de polyéthylène contenue dans la seconde résine de polyoléfine est de 50 % en masse à 100 % en masse, sur la base de 100 % en masse de la masse totale de la seconde résine de polyoléfine, et la quantité de polypropylène contenue dans la seconde résine de polyoléfine est de 0 % en masse à 25 % en masse, sur la base de 100 % en masse de la masse totale de la seconde résine de polyoléfine.

2.  Séparateur pour un dispositif de stockage d'énergie selon la revendication 1, dans lequel le film microporeux multicouche de polyoléfine est stratifié dans l'ordre : la première couche microporeuse, la seconde couche microporeuse et la première couche microporeuse.

3.  Séparateur pour un dispositif de stockage d'énergie selon la revendication 2, dans lequel la première résine de polyoléfine ou la seconde résine de polyoléfine contient de plus du polyéthylène basse densité linéaire.

4.  Séparateur pour un dispositif de stockage d'énergie selon la revendication 3, dans lequel le polyéthylène basse densité linéaire est un copolymère d'éthylène-1-hexène.

5.  Séparateur pour un dispositif de stockage d'énergie selon l'une quelconque des revendications 1 à 4, dans lequel la résine de base acrylique est une matière particulaire et présente une structure noyau-enveloppe avec une section de noyau et une section d'enveloppe recouvrant au moins partiellement la surface externe de la section de noyau.

6.  Séparateur pour un dispositif de stockage d'énergie selon l'une quelconque des revendications 1 à 5, dans lequel la résine de base acrylique comprend un copolymère ayant un monomère insaturé éthylénique avec un groupe polyalkylèneglycol comme l'unité monomère.

7.  Séparateur pour un dispositif de stockage d'énergie selon l'une quelconque des revendications 2 à 6, dans lequel la première couche microporeuse du film microporeux multicouche de polyoléfine contient de plus un ou plusieurs composés choisis parmi la silice, l'alumine et l'oxyde de titane.

8.  Corps stratifié présentant :

    une électrode positive,
    le séparateur pour un dispositif de stockage d'énergie selon l'une quelconque des revendications 1 à 7, et
    une électrode négative,
    stratifiés dans cet ordre.

9.  Rouleau dans lequel un corps stratifié selon la revendication 8 est roulé.

10. Dispositif de stockage d'énergie comprenant le corps stratifié selon la revendication 8 ou le rouleau selon la revendication 9, et une solution d'électrolyte.

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015111086 A
- US 2015140403 A
- US 2009246613 A
- EP 3340343 A
- WO 2015194667 A
- WO 2013146403 A
- WO 2015190264 A
- WO 2015190265 A
- JP 2015050121 A